(19) Europäisches Patentamt
European Patent Office
Office européen des brevets

(11) EP 3 286 357 B1

(12) **EUROPÄISCHE PATENTSCHRIFT**

(45) Veröffentlichungstag und Bekanntmachung des Hinweises auf die Patenterteilung:
**03.07.2019 Patentblatt 2019/27**

(21) Anmeldenummer: **16717649.4**

(22) Anmeldetag: **21.04.2016**

(51) Int Cl.:
***C25B 3/02*** $^{(2006.01)}$ ***C25B 3/10*** $^{(2006.01)}$
***C25B 9/06*** $^{(2006.01)}$ ***C25B 9/20*** $^{(2006.01)}$
***C25B 15/08*** $^{(2006.01)}$

(86) Internationale Anmeldenummer:
**PCT/EP2016/058935**

(87) Internationale Veröffentlichungsnummer:
**WO 2016/170075 (27.10.2016 Gazette 2016/43)**

(54) **VERFAHREN ZUR ELEKTROCHEMISCHEN UMWANDLUNG VON FETTSÄUREN UND ANLAGE ZUR DURCHFÜHRUNG DES VERFAHRENS**

METHOD FOR THE ELECTROCHEMICAL CONVERSION OF FATTY ACIDS AND EQUIPMENT FOR CARRYING OUT THE METHOD

PROCÉDÉ DE CONVERSION ÉLECTROCHIMIQUE D’ACIDES GRAS ET SYSTÈME DE MISE EN OEUVRE DU PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.04.2015 DE 102015207581**

(43) Veröffentlichungstag der Anmeldung:
**28.02.2018 Patentblatt 2018/09**

(73) Patentinhaber: **Fraunhofer-Gesellschaft zur Förderung der angewandten Forschung e.V.**
**80686 München (DE)**

(72) Erfinder:
- **ZIOGAS, Athanassios**
**55124 Mainz (DE)**
- **KOLB, Gunther**
**67433 Neustadt / W. (DE)**
- **PENNEMANN, Helmut**
**55130 Mainz (DE)**
- **SCHUERER, Jochen**
**55296 Gau-Bishofsheim (DE)**
- **TIEMANN, David**
**55239 Gau-Odernheim (DE)**

(74) Vertreter: **Pfenning, Meinig & Partner mbB**
**Patent- und Rechtsanwälte**
**Theresienhöhe 11a**
**80339 München (DE)**

(56) Entgegenhaltungen:
**US-A- 3 652 430 US-A- 3 787 299**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 286 357 B1

## Beschreibung

Erfindungsgemäß wird ein Verfahren und eine Anlage zur elektrochemischen Umwandlung von Fettsäuren, bevorzugt aus nachwachsenden Rohstoffen oder Biomasse, durch Kolbe-Elektrolyse und/oder Hofer-Moest-Elektrolyse bereitgestellt. Das Verfahren kommt mit einem wässrigen Elektrolyten ohne organische Lösungsmittel aus und nutzt einen elektrochemischen Reaktor, der mindestens eine Anode und mindestens eine Kathode enthält, die jeweils eine plane Oberfläche aufweisen und in einem Abstand von $\leq 200\ \mu m$ zueinander angeordnet sind (z.B. wie in der EP 1 114 203 B1 beschrieben). Im Falle der Nutzung mehrerer Kathoden und Anoden, bzw. mehrerer Dünnschichtzellen, können diese elektrisch parallel kontaktiert werden. Die Elektrolyse wird bei einer Stromstärke betrieben, die im Betrieb eine Zellspannung von 3 bis 30 V in der einzelnen Zelle ergibt. Es können dadurch insgesamt höhere Stromdichten bei geringer Wärmeentwicklung erreicht werden, was die Produktausbeute pro Elektrodenfläche erhöht. Ein weiterer Vorteil ist, dass durch die Anordnung der Elektroden eine homogenere Stromdichteverteilung erreicht wird, wodurch eine verbesserte Produktselektivität und Produktausbeute erreicht wird.

Die vorhandenen fossilen Energieressourcen werden immer knapper und die Erschließung neuer Energieressourcen gestaltet sich immer schwieriger. Zudem ist sie mit enormem Energie-und Kostenaufwand sowie großen Umweltproblemen verbunden. Besonders in Zeiten hoher Stromproduktion mit geringem Stromverbrauch (Kapazitätsüberschuss) bestehen temporär große Stromeinspeisungs- und Verteilungsprobleme von regenerativ erzeugtem Strom. Eine effektivere Nutzung von nachwachsenden Rohstoffen oder Biomasse ist wünschenswert. Vorteilhaft ist hierbei eine Vorbehandlung der nachwachsenden Rohstoffe bzw. Rohstoffe aus Biomasse um zunächst (substituierte) Alkansäuren, Alkensäuren (z. B. 2-Phenylessigsäure oder 4-Phenyl-but-2-ensäure) und anschließend qualitativ hochwertige Substanzen wie Alkylaromaten und, Alkenaromaten und Wasserstoff zu gewinnen, bevorzugt durch regenerativ erzeugten Strom in Phasen temporärer Stromüberproduktion.

Die Kolbe-Elektrolyse ist eine der ältesten elektroorganischen Synthesen. Trotz ihrer über 150 Jahre alten Existenz ist diese Methode hauptsächlich im Labormaßstab angewendet worden, aber kaum industriell in großem Maßstab. Entsprechendes gilt für die Hofer-Moest-Synthese (auch "nicht-Kolbe" elektrolytische Synthese genannt).

Im Stand der Technik bekannte Synthesen zur Gewinnung von Kohlenwasserstoffen oder Alkoholen aus Fettsäuren, die auf Kolbe-Elektrolyse oder Hofer-Moest-Elektrolyse basieren, werden grundsätzlich in Elektrolyten enthaltend organische Lösungsmittel (z.B. Alkohol, DMF) durchgeführt. Die Produkttrennung aus der Reaktionsmischung enthaltend organische Lösungsmittel ist meistens nur mit viel Energie und apparativem Aufwand verbunden, was zu hohen Betriebskosten führt, d.h. das Verfahren ist unökonomisch. Einige der verwendeten organischen Lösungsmittel (z.B. einige Alkohole, Acetonitril) sind giftig oder teuer, was zusätzlich Umwelt und Gesundheit belastet und finanzielle Nachteile mit sich bringt d.h. das Verfahren ist unökologisch.

Zudem sind die für die Synthese verwendeten, meist durch Diaphragma oder Polymerelektrolyt-Membran in Anolyt- und Katholytraum geteilten elektrochemischen Zellen (E-Reaktoren) mit vielen Nachteilen behaftet. Konstruktionsbedingt arbeiten die geteilten Zellen bei höherer Zellspannung als ungeteilte Zellen (Zellspannung der geteilten Zellen ist weit über 5 V), denn außer dem Elektrolytpotentialabfall bei Anolyt und Katholyt tragen nach der Formel (1) die Diaphragma- oder Polymerelektrolyt-Membran zum Potentialabfall und der größere Elektrodenabstand zu einem insgesamt hohen Ohm'schen Widerstand bei.

$$\Delta U = \frac{I}{A_e}\left(\frac{d_{AD}}{\kappa_A} + \frac{d_D}{\kappa_D} + \frac{d_{KD}}{\kappa_K}\right) = i\frac{d}{\kappa} \quad (1)$$

$\Delta U$ = Potentialabfall;
I = Strom;
$A_e$ = Elektrodenoberfäche;
$d_{AD}$ = Abstand zwischen Anode und Diaphragma;
$d_{AK}$ = Abstand zwischen Kathode und Diaphragma;
$d_D$ = Diaphragma-Dicke oder Polymerelektrolyt-Dicke;
$\kappa_A$ Anolyt-Leitfähigkeit;
$\kappa_D$ Diaphragma-Leitfähigkeit oder Polymerelektrolyt-Leitfähigkeit;
$\kappa_K$ Katholyt-Leitfähigkeit;
i = Stromdichte;
d = Elektrodenabstand;
$\kappa$ = gemittelte Leitfähigkeit in der Zelle (keine arithmetisch gemittelte)

Dies führt folglich zu einem hohen elektrischen Energieverbrauch bei der Verwendung von geteilten Zellen. Zudem sind geteilte Zellen aufgrund ihrer größere Elektrodenoberfläche, dem Diaphragma, dem Polymerelektrolyt, den Dichtungen, zusätzlichen Pumpen und Behälter für Anolyt und Katholyt, den zwei verschiedene Elektrolytlösungen, dem Energieverbrauch für den Betrieb der Förderpumpen, den häufigen Wartungspausen mit hohen Investitionskosten und Betriebskosten verbunden. Insgesamt machen die im Stand der Technik üblichen geteilten Zellen die Kolbe-Synthese oder nicht-Kolbe (Hofer-Moest)-Synthese unökonomisch und unökologisch.

Die US 3 652 430 A offenbart ein Verfahren zur elektrochemischen Kondensation von Carbonsäuren durch Elektrolyse von Monocarbonsäuren, Halbestern von Dicarbonsäuren oder Aminocarbonsäuren, bei dem Stromdichten von mehr als 10 Ampere pro $dm^2$ an vibrierenden Elektrodenpaaren verwendet werden, und bei dem der Neutralisationsgrad der Carbonsäuren unter 10% gehalten wird, wobei das Verfahren hohe Ausbeuten pro Raum und Zeit ermöglicht und ein Reaktionsprodukt bereitstellt, das problemlos aufgearbeitet werden kann.

Die WO 2014/200916 A1 offenbart ein Verfahren, eine Vorrichtung und Zusammensetzungen zur Herstellung von decarboxylierten Derivaten von Carbonsäuren. Das Verfahren umfasst das Durchführen einer polaritätsumkehrenden Elektrolyse unter Verwendung einer Anode und einer Kathode an einer Lösung einer Carbonsäure, die mehr als ein Kohlenstoffatom enthält, oder einer Lösung eines Salzes, Esters, Derivats oder Vorläufers einer solchen Carbonsäure, um die Carbonsäure oder deren Derivat zu decarboxylieren und decarboxylierte Derivate bereitzustellen.

Ausgehend hiervon ist es die Aufgabe der vorliegenden Erfindung ein Verfahren bereitzustellen, das auf ökonomische und ökologische Art und Weise Fettsäuren, insbesondere solche aus nachwachsenden Rohstoffen oder Biomasse, elektrochemisch in Chemikalien für die Transportindustrie (z.B. Kraftstoffe), Kosmetikindustrie, Pharmaindustrie und chemische Industrie (z.B. Schmieröle) umwandelt. Es soll hierfür regenerativ erzeugter elektrischer Strom verwendet werden können. Ferner soll eine Anlage zur Durchführung des Verfahrens bereitgestellt werden.

Die Aufgabe wird gelöst durch das Verfahren gemäß Anspruch 1 und die Anlage gemäß Anspruch 9. Die abhängigen Ansprüche zeigen vorteilhafte Weiterbildungen auf.

Es wird ein Verfahren zur elektrochemischen Umwandlung von Fettsäuren, insbesondere solche aus nachwachsenden Rohstoffen, durch Kolbe-Elektrolyse oder Hofer-Moest-Elektrolyse bereitgestellt. Das Verfahren umfasst die Schritte

a) Bereitstellung eines wässrigen Elektrolyten in einem Behälter, wobei der wässrige Elektrolyt ein Alkalimetallsalz mindestens einer Fettsäure und Wasser (optional zudem eine Fettsäure), aber keine organischen Lösungsmittel, enthält oder daraus besteht und eine elektrische Leitfähigkeit von $\geq 1\ mS \cdot cm^{-1,}$ aufweist,

b) Leiten des wässrigen Elektrolyten in einen elektrochemischen Reaktor (E-Reaktor), der mindestens eine Dünnschichtzelle (optional mehrere) mit mindestens einem Elektrodenpaar (optional mehreren) enthält oder daraus besteht, wobei das mindestens eine Elektrodenpaar eine Anode und eine Kathode enthält, die jeweils eine plane Oberfläche aufweisen und (bevorzugt parallel) in einem Abstand von $\leq 200\ \mu m$ zueinander angeordnet sind;

c) Durchführung einer Kolbe-Elektrolyse und/oder Hofer-Moest-Elektrolyse des wässrigen Elektrolyten (in dem elektrochemischen Reaktor) bei einer Stromstärke, die eine Zellspannung von 3 bis 30 V, vorzugsweise 3 bis 5 V, (pro Elektrodenpaar und/oder Zelle) ergibt, wobei Elektrolyseprodukte entstehen;

d) Leiten der Elektrolyseprodukte in einen Produktmischungsbehälter.

Ein Vorteil der Erfindung ist, dass aufgrund der guten Elektrolytleitfähigkeit und des kleinen Abstands der Kathode und Anode nur ein kleiner Potentialabfall in dem E-Reaktor beobachtet wird, so dass mehr Strom zur Synthese zur Verfügung steht, womit die höhere Stromdichten erzeugt werden und bei bestimmter Elektrodenfläche eine höhere Produktausbeute erzielt wird oder bei bestimmter gewünschter Ausbeute die Elektrodenoberfläche und folglich die Investitionskosten minimiert werden können. Die alleinige Verwendung von Wasser als Lösungsmittel hat den Vorteil, dass keine Trennung der Produkte mithilfe organischer Extraktionsmittel nötig ist und die damit verbundenen kapitalintensiven und energieintensiven Verfahrensschritte nicht benötigt werden.

Die erzeugten Produkte sind vergleichbar zu Kraftstoffen, die aus fossilen Quellen gewonnen werden, sie weisen beispielsweise eine niedrige Viskosität auf. Sie haben gegenüber fossilen Brennstoffen entscheidende Vorteile, da sie keinen giftigen Schwefel oder keine giftigen Schwefelverbindungen enthalten und auch keine krebserregende Substanzen (z.B. polyzyklische aromatische Kohlenwasserstoffe oder Benzol) aufweisen. Insbesondere ist es für den Flugzeugtreibstoff Kerosin vorteilhaft, wenn er Aromaten-frei hergestellt werden kann. Dies verhindert die Emission von Aromaten, die meistens umwelt- und gesundheitsbelastend sind, in die Luft, was in Flughafenregionen mit dichtem Luftverkehr besonders vorteilhaft ist. Zudem sind die erzeugten Produkte $CO_2$-neutral. Auch Wasserstoff stellt ein verwertbares Produkt des Verfahrens dar.

Obwohl der Brennwert der FAME-analogen Alkane nur etwa 2-5% höher ist, ist der große Vorteil der elektrochemisch erzeugten Produkte (Kohlenwasserstoffe) gegenüber Biodiesel (Fettsäurenmethylestern) die niedrigere Viskosität und Polarität, was die Nutzung dieser Produkte ($C_6$-$C_{22}$) auch in extrem kalten Regionen ($C_8$ hoher Oktan Wert,

$C_8$-$C_{16}$ Kerosin, $C_8$-$C_{22}$ Diesel mit hohem Cetan-Wert) erlaubt und zudem eine Veredelung von nachwachsenden Rohstoffen darstellt. Zudem weisen die elektrochemisch erzeugten Kohlenwasserstoffe verglichen mit Biodiesel (Fettsäuremethylestern) eine geringere Korrosivität auf, was sie schonender für Motoren macht und deren Langzeitstabilität erhöht. Da die so hergestellten Kraftstoffe ähnliche Eigenschaften wie Benzin, Kerosin oder Diesel besitzen, ist deren Verträglichkeit im Kontakt mit den treibstoffführenden Teilen der Fahrzeuge besser als die des Biodiesels und es ist anzunehmen, dass sie von Fahrzeugherstellern und Fahrzeugbesitzern besser akzeptiert werden.

In einer bevorzugten Ausführungsform des Verfahrens wird die Produktzusammensetzung durch kontinuierliche Regulierung des pH-Wertes gesteuert. Hier kann die Herstellung von bestimmten Kraftstoffen (Benzin-, Kerosin-, Lampenöl- und Diesel ähnlichen Produkten) in einem Schritt des erfindungsgemäßen Verfahrens durch Nutzung von durch Simulation ermittelter charakteristischer Mischungen von Fettsäuren gezielt vorhergesagt bzw. gesteuert werden.

Die erfindungsgemäß hergestellten Produkte finden generell eine breite Anwendung in der pharmazeutischen Industrie und Kosmetikindustrie sowie in der chemischen Industrie. Die nicht-Kolbe Elektrolyse von gesättigten und ungesättigten Fettsäuren führt zu wertvollen Produkten wie langkettigen Alkoholen oder Olefinen. Fettalkohole, wie z.B. Stearylalkohol und Cetylalkohol werden als nichtionische Tenside verwendet und lassen sich als Grundlage für viele Cremes und Salben einsetzen. Sie sind nicht mit Wasser mischbar, können aber durch Umsetzung mit Schwefelsäure in Fettalkoholsulfate überführt werden, die eine große Bedeutung als anionische Tenside in Waschmitteln haben. Durch Ethoxylierung lassen sich Fettalkoholethoxylate als nichtionische Tenside gewinnen, die in Körperpflegeprodukten verwendet werden.

Vorteilhaft für das Verfahren ist ein schneller Durchsatz (hohe Fließgeschwindigkeit und/oder kurze aber ausreichende Verweilzeiten), denn in diesem Fall erfolgt nur ein Elektronenübertrag und Nebenprodukte werden vermieden. Weiterhin wird durch die hohe Fließgeschwindigkeit entstandenes Gas aus dem Reaktionsraum sicher und schnell ausgetragen, so dass keine lokalen Stromdichtschwankungen entstehen. Auch die ggf. entstehende Abwärme kann durch den schnell fließenden wässrigen Elektrolyten abgeführt werden, so dass eine Kühlung wenig oder gar nicht notwendig ist.

In einer bevorzugten Ausführungsform werden Fettsäuren aus nachwachsenden Rohstoffen und/oder Bioabfällen eingesetzt. In einer bevorzugten Ausführungsform der Erfindung wird Biodiesel (Fettsäureester) veredelt, indem zunächst katalytisch freie Fettsäuren und anschließend über Reaktion mit Lauge deren Alkalimetallsalze erzeugt werden und daraufhin die elektrochemische Synthese der entsprechenden Kohlenwasserstoffen stattfindet. Insbesondere ist dabei aus umwelttechnischen Gesichtspunkten vorteilhaft, wenn das erfindungsgemäße Verfahren mit Strom aus regenerativen Quellen betrieben wird.

Das Alkalimetallsalz der Fettsäure kann vor Schritt a) durch Zugabe von wässriger Natronlauge oder Kalilauge (bestimmter Konzentration und Menge) zu einer Fettsäure hergestellt werden. Anhand des pH-Wertes kann auf das Verhältnis der Menge von Fettsäurealkalimetallsalz zu Fettsäure rückgeschlossen werden.

Die Kathode und Anode in dem elektrochemischen Reaktor weisen bevorzugt einen Abstand von $\leq$ 150 $\mu$m, auf, besonders bevorzugt $\leq$ 100 $\mu$m, insbesondere 25 $\mu$m bis 100 $\mu$m. Ganz besonders bevorzugt weist der elektrochemische Reaktor mehr als eine Anode und mehr als eine Kathode auf, die jeweils zueinander einen Abstand von $\leq$ 200 $\mu$m, bevorzugt $\leq$ 150 $\mu$m, besonders bevorzugt $\leq$ 100 $\mu$m, insbesondere 25 bis 100 $\mu$m, aufweisen.

Die Kathode und Anode können in einer bevorzugten Ausführungsform in einem Toleranzbereich von $\pm$ 1 $\mu$m, bevorzugt $\pm$ 0,5 $\mu$m, besonders bevorzugt $\pm$ 0,1 $\mu$m, insbesondere $\pm$ 0,05 $\mu$m (gemessen mit Weißlichtinterferometer nach EN ISO 25178) den gleichen Abstand aufweisen (Maß für die Rauigkeit der Elektrodenoberfläche). Eine Rauigkeit (Morphologie) der Elektrodenoberfläche von $\leq$ 0,1 $\mu$m ist besonders vorteilhaft für eine homogene Stromdichteverteilung. Ganz besonders bevorzugt weist der elektrochemische Reaktor mehr als eine Anode und mehr als eine Kathode auf, die jeweils zueinander einen Abstand in dem oben genannten Toleranzbereich aufweisen.

Die Kathode und/oder Anode können Flachelektroden (Flachkathoden und/oder Flachanoden) enthalten oder daraus bestehen.

Bevorzugt ist die Kathode und Anode (bevorzugt mehrere Kathoden und/oder Anoden (die Elektrodenpaare) des elektrochemischen Reaktors parallel zueinander angeordnet. Diese Anordnung erhöht die zur Verfügung stehende Elektrodenoberfläche sowie den Umsatz pro Reaktor. Weiterhin verbessert eine Parallelanordnung die Produktausbeuten und Produktselektivitäten, da diese Anordnung sicherstellt, dass sich an jedem Punkt zwischen Anode und Kathode bei konstantem Strom und gleicher Stromverteilung lokal die gleiche Spannung einstellt. Bevorzugt weist der elektrochemische Reaktor viele Anoden und Kathoden auf, die parallel und alternierend angeordnet sind. Diese Anordnung kann die Form eines Stapels aufweisen. Die parallele Anordnung der Elektroden in einem Stapel bewirkt eine homogene Stromdichteverteilung und damit hohe Produktausbeuten und auch Produktselektivitäten.

In einer bevorzugten Ausführungsform weist der elektrochemische Reaktor mehrere Dünnschichtzellen auf, deren Abstand zueinander im Wesentlichen identisch ist.

In einer weiteren bevorzugten Ausführungsform wird die Elektrolyse bei einer Zellspannung von 3 bis 20 V, bevorzugt von 3 bis 10 V, besonders bevorzugt von 3 bis 5 V, durchgeführt. Dieser Zellspannungsbereich ist aus ökologischen, betriebs- und energiewirtschaftliche Gründen vorteilhaft.

Das erfindungsgemäße Verfahren kann dadurch gekennzeichnet sein, dass der wässrige Elektrolyt vertikal entgegen der Schwerkraft durch den elektrochemischen Reaktor geleitet wird und/oder die Elektrolyseprodukte vertikal entgegen der Schwerkraft aus dem elektrochemischen Reaktor ausgeleitet werden. Dies hat den Vorteil, dass die sich bildenden Produkte aufgrund ihrer geringeren Dichte schneller nach oben aus dem elektrochemischen Reaktor entweiche wodurch eine größere Kontaktfläche der Elektroden für den wässrigen Elektrolyt mit Edukt bereitsteht.

Der wässrige Elektrolyt kann Alkalimetallsalze von Fettsäuren, und optional Fettsäuren, in einer Konzentration von mehr als 0,1 mol/L (optional ≥ 1 mol/L), bevorzugt 0,2 mol/L bis 2 mol/L, besonders bevorzugt 0,5 mol/L bis 1,5 mol/L, ganz besonders bevorzugt 0,8 mol/L bis 1,25 mol/L, insbesondere 1 mol/L bis 1,15 mol/L, enthalten.

Ferner kann der Elektrolyt frei von Leitsalzen sein d.h. keine Leitsalze enthalten.

In einer bevorzugten Ausführungsform weist der Elektrolyt eine Leitfähigkeit von ≥ 5 $mS\cdot cm^{-1}$, besonders bevorzugt ≥ 10 $mS\cdot cm^{-1}$, insbesondere ≥ 14 $mS\cdot cm^{-1}$ bis 25 $mS\cdot cm^{-1}$, auf.

In einer bevorzugten Ausführungsform enthält der Elektrolyt keine Phasentransferzusatzstoffe.

Der Elektrolyt kann als Lösung oder (bevorzugt als temporäre) Emulsion vorliegen. Die Emulsion enthält Fettsäuremoleküle in einer mizellenartigen Anordnung, d.h. die hydrophilen Enden ragen von einem hydrophobem Ende benachbarter Fettsäuren ausgehend in die wässrige Lösung. Die Carboxylatgruppen der Fettsäuren werden auf diese Weise in eine für das Verfahren vorteilhafte Anordnung gebracht. Die Anordnung ist deshalb vorteilhaft, da die negativ geladenen Carboxylatgruppen der Fettsäuremoleküle an der Oberfläche der Mizellen nebeneinander angeordnet sind und damit eine große Fläche dicht gepackter, oxidierbarer Carboxylatgruppen zur Oxidation an der planen Oberfläche der Anode exponieren. Nach Oxidation der Carboxylatgruppen der Fettsäuremoleküle an der Anode werden diese als $CO_2$ abgespalten, wodurch Alkylradikale der Fettsäuren in einem unpolaren Milieu und in direkter Nachbarschaft zueinander zurückbleiben. Als Folge der lokalen Konzentration der Alkylradikale in dem unpolaren Milieu wird die Rekombination der Alkylradikale zu einem Alkyldimer stark begünstigt und damit die Ausbeute des gewünschten Produkts gesteigert. Die Emulsion kann durch kontinuierliches Rühren des Elektrolyts und/oder Mischen der Bestandteile des Elektrolyts, vorzugsweise mit einem sogenannten Mikromischer (z.B. wie die in EP 1 185 359 B1 bzw. EP 1 311 341 B1 beschriebenen), hergestellt werden. Insbesondere wird die Bildung einer mizellaren Emulsion mit steigender Länge der C-Kette der Fettsäuremoleküle (von Pentansäure bis Undekansäure) und steigender Konzentration der Fettsäuremoleküle begünstigt.

Abhängig von Reaktionsbedingungen wie Temperatur, Elektrolytzusammensetzung, pH-Wert bei wässrigen Elektrolyten, Elektrolytleitfähigkeit, Eduktkonzentration und Elektrodenmaterialien sowie Betriebsbedingungen, wie Verweilzeit und Stromdichte, kann die selektive Bildung von bestimmten Produkten erreicht werden. So werden z. B. bei der Kolbe-Elektrosynthese die Reaktionsbedingungen samt Elektroden vorteilhafterweise so gewählt, dass möglichst kein weiterer Elektronentransfer stattfindet (z. B. pH ≤ 7). Der wässrige Elektrolyt kann durch Zugabe von Fettsäure oder Fettsäurealkalimetallsalz oder Lauge (z.B. KOH)

i) auf pH ≤ 7, bevorzugt pH 6 bis 7, besonders bevorzugt pH 6,7 bis 6,9, eingestellt werden und/oder auf eine elektrische Leitfähigkeit von ≥ 1 $mS\cdot cm^{-1}$, bevorzugt ≥ 14 $mS\cdot cm^{-1}$, eingestellt werden, um überwiegend Alkane der Fettsäure zu erhalten (überwiegend Kolbe-Elektrolyse); oder
ii) auf pH > 7 bis 8,7 eingestellt werden und/oder auf eine elektrische Leitfähigkeit von ≥ 5 $mS\cdot cm^{-1}$, bevorzugt von ≥ 17 $mS\cdot cm^{-1}$, eingestellt werden, um überwiegend Olefine der Fettsäure zu erhalten (überwiegend Hofer-Moest-Eletrolyse); oder
iii) auf pH > 8,7 eingestellt werden und/oder auf eine elektrische Leitfähigkeit von ≥ 5 $mS\cdot cm^{-1}$, bevorzugt von ≥ 17 $mS\cdot cm^{-1}$, eingestellt werden, um überwiegend Alkohole der Fettsäure zu erhalten (überwiegend Hofer-Moest-Elektrolyse).

Der pH-Wert des Elektrolyten kann kontinuierlich geregelt werden oder in bestimmten Zeitabständen angepasst werden.

Die Kathode und/oder Anode, bevorzugt (nur) die Anode, können

i) Platin, platinierte Substrate (wie platiniertes Edelstahl und/oder platiniertes Titan), Titan, Glaskohlenstoff, Graphit und/oder Nickel enthalten oder daraus bestehen; und/oder
ii) ein mit dotiertem Diamant, bevorzugt Bor-dotiertem Diamant, beschichtetes, elektrisch leitfähiges Substrat enthalten oder daraus bestehen, wobei es sich bei dem Substrat bevorzugt um Platin, Edelstahl, Titan, Glaskohlenstoff, Graphit und/oder Nickel handelt; und/oder
iii) monopolar arbeiten.

Der Vorteil an mit dotiertem Diamant beschichteten Substraten als Anode und/oder Kathode, bevorzugt nur als Anode, ist, dass solche Elektroden-Kombinationen (Kathoden bzw. Anoden) kostengünstiger bereitgestellt werden können als beispielsweise Kathoden bzw. Anoden, die ein mit Platin beschichtetes Substrat aufweisen. In dieser Hinsicht ist die Kombination aus einer Anode, die ein mit dotiertem Diamant beschichtetes elektrisch leitfähiges Substrat enthält oder daraus besteht in Verbindung mit einer Kathode, die aus einem Diamant-freien Substrat besteht, besonders günstig und sinnvoll.

Die Kathode und/oder Anode kann auch einen stromleitenden Kern (aus z.B. Edelstahl und/oder Titan) aufweisen, der mit einem Edelmetall (wie z.B. Platin) beschichtet ist. In diesem Fall weist die Beschichtung aus Edelmetall bevorzugt eine Dicke (Schichtdicke) von 1 bis 10 $\mu$m, bevorzugt 2 bis 8 $\mu$m, besonders bevorzugt 4 bis 6 $\mu$m, auf, um eine plane, fehlstellenarme und stabile Schicht zu erhalten und gleichzeitig die Kosten des Reaktors niedrig zu halten.

Aus dem Produktmischungsbehälter kann

i) eine auf dem wässrigen Elektrolyt schwimmende Phase, welche die umgewandelte Fettsäuren als Elektrolyseprodukte enthält, in einen Produktsammelbehälter abgeführt werden und ggf. über eine Analytik (bspw. GC) die Produktzusammensetzung kontrolliert werden; und/oder

ii) eine Gasproduktphase, welche insbesondere Wasserstoff und Kohlendioxid enthält, teilweise zu einer Gaschromatographieanlage abgeführt werden, wobei in der Gaschromatographieanlage bevorzugt eine Gaschromatographie der Gasproduktphase durchgeführt wird, insbesondere in einem Takt von 2-3 Minuten; und/oder

iii) eine Gasproduktphase, welche Wasserstoff und Kohlendioxid enthält, abgeführt werden, in Wasserstoff und Kohlendioxid getrennt wird und Wasserstoff und Kohlendioxid getrennt in Sammelflaschen gespeichert werden; und/oder

iv) die Phase des wässrigen Elektrolyten in den Behälter aus Schritt a) zurückgeführt werden.

Bevorzugt wird in Schritt b) des erfindungsgemäßen Verfahren der wässrige Elektrolyt über mindestens einen Leitfähigkeitsmesssensor und/oder mindestens ein pH-Messsensor in den elektrochemischen Reaktor geleitet, wobei besonders bevorzugt während des Verfahrens kontinuierlich die Leitfähigkeit und der pH-Wert gemessen und geregelt wird.

Die mindestens eine Fettsäure kann ausgewählt sein aus der Gruppe bestehend aus gesättigten oder ungesättigten, unsubstituierten oder substituierten, Fettsäuren, bevorzugt ausgewählt aus der Gruppe bestehend aus unsubstituierter oder substituierter n-Pentansäure, n-Hexansäure, n-Heptansäure, n-Oktansäure, n-Nonansäure, n-Dekansäure, n-Undekansäure, und Mischungen hiervon, optional n-Hexansäure, n-Heptansäure, n-Oktansäure, n-Nonansäure und Mischungen hiervon.

Bei dem Alkalimetallsalz der mindestens einen Fettsäure handelt es sich bevorzugt um ein Kaliumsalz, Lithiumsalz und/oder Natriumsalz der mindestens einen Fettsäure.

Die Kolbe-Elektrolyse und/oder Hofer-Moest-Elektrolyse kann

i) mit regenerativ erzeugtem elektrischen Strom durchgeführt werden, bevorzugt Strom, der durch Windkraft, Wasserkraft und/oder Sonnenstrahlung erzeugt wurde, besonders bevorzugt durch regenerativ erzeugten Strom in Phasen temporärer Stromüberproduktion; und/oder

ii) bei einer Zellspannung $\leq$ 30 V, optional $\leq$ 10 V, betrieben werden; und/oder

iii) bei einer Stromstärke $\leq$ 500 A, optional $\leq$ 10 A, betrieben werden; und/oder

iv) bei einer Stromdichte von 1 bis 10 kA/$m^2$, bevorzugt 1,1 bis 5 kA/$m^2$, besonders bevorzugt 1,2 bis 3 kA/$m^2$, insbesondere 1,3 bis 1,5 kA/$m^2$ durchgeführt werden; und/oder

v) mit Gleichstrom und/oder Gleichspannung (d.h. kein Wechselstrom bzw. keine Wechselspannung) betrieben werden.

Der Vorteil an einem Betrieb der Kolbe-Elektrolyse und/oder Hofer-Moest-Elektrolyse mit Gleichstrom bzw. Gleichspannung ist, dass weniger Energie und weniger verfahrenstechnischer Aufwand nötig ist als bei einem Betrieb mit Wechselstrom bzw. Wechselspannung.

Die im Stand der Technik bekannten Vorteile eines Betriebs mit Wechselstrom bzw. Wechselspannung, nämlich die verbesserte Entfernung von Ablagerungen und Gasblasen von den Elektroden, werden in dem erfindungsgemäßen Verfahren auch beim Betrieb mit Gleichstrom und/oder Gleichspannung erreicht. Der Grund hierfür ist, dass die Kathode und Anode des mindestens einen Elektrodenpaars erfindungsgemäß in dem sehr kleinen Abstand von $\leq$ 200 $\mu$m zueinander angeordnet sind. Durch diesen kleinen Abstand entsteht eine hohe lokale Strömungsgeschwindigkeit zwischen Kathode und Anode, wodurch die Entstehung von Ablagerungen und Gasblasen zwischen Anode und Kathode unterdrückt wird.

Weiterhin führt die große Fließgeschwindigkeit (beispielsweise 0,5 cm/s bis 200 cm/s, bevorzugt 0,75 cm/s bis 150 cm/s) zwischen den Elektroden zu einer hohen Konvektion, so dass sich eine sehr dünne elektrische Doppelschicht an der Elektrodenoberfläche mit sehr kurzen Diffusionswegen für die Edukte ergibt. Die Edukte gelangen leichter und schneller an die Elektrodenoberfläche. Weiterhin erzwingt die hohe Fließgeschwindigkeit eine kurze Verweilzeit (beispielsweise 0,5 sek. bis 3 min., bevorzugt 0,75 sek. bis 1,5 min.), so dass Nebenreaktionen vermieden werden können.

In Fließrichtung bildet sich nur eine kleiner Konzentrationsgradient und senkrecht zur Elektrodenoberfläche ein großer Konzentrationsgradient der Edukte aus, d.h. die in Strömungsrichtung verbrauchten Edukte können schnell aus dem Strömungsprofil mit höheren Konzentrationen nachströmen. Es erfolgt ein gleichmäßiger Eduktverbrauch in Verbindung mit einer homogenen Stromdichteverteilung.

Die vorzugsweise kontinuierliche oder zumindest semi-kontinueirliche Verfahrensführung und die Möglichkeit der schnellen Anpassbarkeit der Umsatzmengen an zeitlich schwankende zur Verfügung stehende Strommengen ermöglicht einen flexiblen und skalierbaren Einsatz des Verfahrens als Speicherverfahren.

Erfindungsgemäß wird ferner eine Anlage bereitgestellt, die zur Durchführung des erfindungsgemäßen Verfahrens angepasst ist, wobei die Anlage

a) einen Behälter für einen wässrigen Elektrolyt,
b) einen elektrochemischen Reaktor, der mindestens eine Dünnschichtzelle mit mehreren Elektrodenpaaren enthält oder daraus besteht, wobei die Elektrodenpaare eine Anode und eine Kathode enthalten, die jeweils eine plane Oberfläche aufweisen und in einem Abstand von $\leq 200\ \mu m$ zueinander angeordnet sind;
c) eine Stromquelle zur Durchführung einer Kolbe-Elektrolyse und/oder Hofer-Moest-Elektrolyse des wässrigen Elektrolyten in dem elektrochemischen Reaktor, wobei die Stromquelle elektrisch, bevorzugt mittels eines Shunts, so dass die übertragene Ladungsmenge direkt und kontinuierlich festgestellt werden kann, mit dem elektrochemischen Reaktor verbunden ist;
d) einen Produktmischungsbehälter zur Aufnahme der Elektrolyseprodukte, wobei der Produktmischungsbehälter über eine fluidische Verbindung mit dem elektrochemischen Reaktor verbunden ist und über eine weitere fluidische Verbindung mit dem Behälter verbunden ist;

enthält oder daraus besteht, dadurch gekennzeichnet, dass die Kathoden und Anoden elektrisch parallel kontaktiert sind.

Der Behälter der Anlage enthält erfindungsgemäß einen wässrigen Elektrolyt, der eine Mischung aus mindestens einem Alkalimetallsalz von mindestens einer Fettsäure und Wasser, aber keine organischen Lösungsmittel, enthält oder daraus besteht und eine elektrische Leitfähigkeit von $\geq 1\ mS \cdot cm^{-1}$, bevorzugt $\geq 5\ mS \cdot cm^{-1}$, besonders bevorzugt $\geq 10\ mS \cdot cm^{-1}$, insbesondere $\geq 14$ bis $25\ mS \cdot cm^{-1}$, aufweist.

Der elektrochemische Reaktor kann an einer unteren, bodennahen Stelle fluidisch mit dem Behälter verbunden sein und/oder an einer oberen, bodenfernen Stelle fluidisch mit dem Produktmischungsbehälter verbunden sein. Dies hat den Vorteil, dass die Produkte der chemischen Reaktion in dem elektrochemischen Reaktor aufgrund ihrer geringeren Dichte schneller nach oben aus dem elektrochemischen Reaktor entweichen können, wodurch eine größere Kontaktfläche der Elektroden des Reaktors für den wässrigen Elektrolyt mit Edukt bereitsteht.

Die Kathoden und/oder Anoden der Anlage weisen bevorzugt die gleichen technischen Merkmale (Aufbau, Abstand zueinander etc.) auf wie die in dem erfindungsgemäßen Verfahren verwendeten Kathoden und/oder Anoden (siehe oben).

Die fluidische Verbindung zwischen Behälter und elektrochemischem Reaktor kann mindestens einen Leitfähigkeitsmesssensor und/oder mindestens einen pH-Messsensor enthalten, wobei die fluidische Verbindung optional eine Förderpumpe mit Fluss- und Druckcontroller enthält.

Die Stromquelle kann dazu konfiguriert sein

i) eine Zellspannung bis zu 30 V, optional bis zu 10 V, zu erzeugen; und/oder
ii) eine Stromstärke bis zu 500 A, optional bis zu 10 A, zu erzeugen; und/oder
iii) eine Stromdichte von 1 bis 10 $kA/m^2$, bevorzugt 1,1 bis 5 $kA/m^2$, besonders bevorzugt 1,2 bis 3 $kA/m^2$, insbesondere 1,3 bis 1,5 $kA/m^2$, zu erzeugen; und/oder
iv) einen Gleichstrom und/oder eine Gleichspannung zu erzeugen (d.h. es kann sich um eine Gleichstromquelle und/oder Gleichspannungsquelle handeln).

Die Stromquelle kann über einen Amperestundenzähler mit dem elektrochemischen Reaktor verbunden sein.

In einer bevorzugten Ausgestaltungsform ist der Behälter über eine fluidische Leitung mit einem Vorratsgefäß verbunden, das bevorzugt wässrigen Elektrolyten enthält, wobei die fluidische Leitung besonders bevorzugt eine Förderpumpe mit Fluss- und Druckcontroller enthält.

Der Produktmischungsbehälter kann in einer oberen, bodenfernen Stelle eine fluidische Leitung zu einer Gaschromatographieanlage und/oder eine fluidische Leitung zu einer $H_2/CO_2$-Trennvorrichtung zur Speicherung oder Ausleitung von $H_2$ und $CO_2$ in Speichereinrichtungen oder nachfolgende Reaktionsanlagen zur Verwertung der Gase, insbesondere des Wasserstoffs, enthalten.

Anhand der nachfolgenden Figuren und Beispiele soll der erfindungsgemäße Gegenstand näher erläutert werden ohne diesen auf die hier dargestellten spezifischen Ausführungsformen einschränken zu wollen.

Figur 1 zeigt die pH-Wert-Abhängigkeit des molaren Verhältnisses von n-Alkansäure zu Kaliumhydroxid.

Figur 2, 2a und 2b zeigen die schematische Darstellung einer Anlage zur Durchführung des Verfahrens zur elektrochemischen Umwandlung von Fettsäuren stammend aus nachwachsenden Rohstoffen oder Biomasse durch Kolbe-Elektrolyse oder nicht-Kolbe-Elektrolyse. Behälter 1 kann mit dem wässrigen Elektrolyt gefüllt sein. Die Förderpumpe 2 ist für den Transport des Elektrolyten im Kreis verantwortlich. Die zweite Förderpumpe 2' pumpt frischen wässrigen Elektrolyt aus dem Elektrolyt-Vorratsgefäß 16 in den Behälter 1. Der Behälter 1 ist mit dem elektrochemischen Reaktor 5 über eine fluidische Leitung verbunden, welche die Förderpumpe 2, einen Leitfähigkeitsmesssensor 3 und einen pH-Messsensor 4 enthält. Der elektrochemische Reaktor 5 enthält einen Stapel monopolar arbeitender Elektroden und ist zudem mit einem Wärmetauscher und einem Temperaturmesssensor ausgerüstet. Der elektrochemische Reaktor 5 ist über einen Shunt 19 und einen Amperestundenzähler 17 mit einer Stromquelle 18 verbunden. Zudem verläuft von dem elektrochemischen Reaktor 5 eine fluidische Leitung zu dem Produktmischungsbehälter 6, in dem sich wässriger Elektrolyt in einer unteren, bodennahen Phase 7 und die umgesetzten Fettsäuren in einer darüberliegenden, bodenfernen Produktphase sammeln. Der Produktmischungsbehälter 6 weist eine erste fluidische Verbindungen 9, eine zweite fluidische Verbindung 11 und eine dritte fluidische Verbindung 12 auf. Über die erste fluidische Verbindung 9 wird das Gasproduktgemisch zur einer $H_2/CO_2$-Trennvorrichtung 13 geführt. Die erste fluidische Verbindung 9 ist über eine fluidische Kapillarleitung 10 mit einem Online-Gaschromatographen verbunden. Der Online-Gaschromatograph nimmt automatisch eine Gasprobe mit einem Volumen von 1-10 ml im 2-3 Minuten Takt und analysiert diese. In der $H_2/CO_2$-Trennvorrichtung werden $H_2$-Gas und $CO_2$-Gas mit darin enthaltenen geringen Mengen an $C_2$-$C_4$ Kohlenwasserstoffen getrennt und jeweils in einer Sammelflasche 14, 15 gespeichert. Über die zweite fluidische Verbindung 11 wird die obere flüssige Produktphase 8 in den Produktbehälter 20 geleitet. 0,5-1 ml des flüssigen Produkts wird dann zur gaschromatographischen Analyse entnommen. Die wässrige Phase 6 fließt als Rücklauf über die dritte fluidische Verbindung 12, die den zweiten Behälter 7 mit der Mischer 21 verbindet, und mit dem frischen Elektrolyt gemischt wird zurück in den Behälter 1. Der Behälter 1 wird in manche Fällen besonders intensiv mit einem Rührgerät 22 gerührt, um Emulsionen zur erzeugen. In Figur 2a ist dargestellt, dass Fettsäure(n) und/oder deren Gemische aus dem dritten Behälter 16' mit Alkalihydroxid Lösung von vierten Behälter 16" und mit Hilfe von Förderpumpen 2', 2" und eines zweiten Mischers 21' gemischt. Der zweite Mischer 21' ist mit dem ersten Mischer 21 über eine fluidische Leitung verbunden, welche einen zweiten Leitfähigkeitsmesssensor 3' und einen zweiten pH-Messsensor 4' enthält. Der über den zweiten Mischer 21' frisch hergestellter Elektrolyt wird mit Hilfe des ersten Mischers 21 mit nicht umgesetzten Elektrolyt (Elektrolyt Rücklauf) gemischt und über eine fluidische Leitung in den Behälter 1 befördert. In Figur 2b ist dargestellt, dass zwischen dem zweiten Mischern 21' und ersten Mischer 21 der das Elektrolyt-Vorratsgefäß 16 mit dem frisch hergestellten Elektrolyt gefüllt wird. Der frische Elektrolyt vom Elektrolyt-Vorratsgefäß 16 wird dann mit Hilfe einer weiteren Förderpumpe 2'" und des Mischers 21 mit nicht umgesetzten Elektrolyt (Elektrolyt Rücklauf) gemischt und über eine fluidische Leitung in den Behälter 1 befördert.

Figur 3 zeigt eine parallele Verschaltung der monopolaren Elektroden in dem elektrochemischen Reaktor.

Figur 4 zeigt den Energie- und Strombedarf sowie die Produktmengen, bei unterschiedlichen Zellspannungen eines mit 80%-Stromausbeute 2 MW-Leistung betriebenen E-Reaktors.

Figur 5 zeigt eine durch offline-GC-MS gemessene Produktmischung der n-Oktan Elektrosynthese aus n-Pentansäure.

Figur 6 zeigt eine durch offline-GC-MS gemessene Produktmischung der Kerosin-Elektrosynthese, die aus einer Mischung von n-Alkansäuren (n-Pentansäure, n-Hexansäure, n-Heptansäure, n-Oktansäure, n-Nonansäure) hergestellt wurde.

Figur 7 zeigt einen Vergleich aus laut Berechnung erwarteten Mengen an n-Alkanen (Soll) zu experimentell erhaltenen Mengen an n-Alkanen (Ist) für experimentell hergestelltes Kerosin (A), Diesel (B) und Lampenöl (C).

Figur 8 zeigt die allgemeinen Reaktionsstufen für die Ein-Elektronendecarboxylierung (A) und die Zwei-Elektronendecarboxylierung (B) von organischen Carboxylaten. Ferner ist beispielhaft die Umsetzung eines Fettsäuregemisches aus Stearinsäure und Acetat zu den entsprechenden Alkanen über die Kolbe-Elektrolyse dargestellt (C).

Figur 9 zeigt mögliche Produkte bzw. Produktgemische der Kolbe-Elektrolyse von Fettsäuren und deren Gemischen.

**Beispiel 1 - Umwandlung von gesättigten Fettsäuren zu gesättigten Kohlenwasserstoffen mit der Kolbe-Elektrolyse**

Die durch alkalische Verseifung meist aus pflanzlichen Ölen, tierischen Fetten oder durch Fermentation von Biomasse gewonnenen freien Fettsäuren bzw. deren Alkalisalze lassen sich bei schwachsauren Bedingungen (pH 6,7-6,9) und meist auf glatten Pt-Elektroden durch anodische Oxidation decarboxylieren. Dabei entstehen bei einem Elektronentransfer hochreaktive Radikalintermediate, die durch Dimerisierungen oder/und Kupplungen zu langkettigen Kohlenwasserstoffen führen. Die in der Elektrolysezelle stattfindenden Reaktionsschritte einer Umwandlung von Carbonsäuren (R-COOH) in Alkane (R-R) durch Dimerisierung der elektrochemisch erzeugten Radikale R· sind durch folgende Gleichungen illustriert, wobei R den Alkanrest bezeichnet.

| | | |
|---|---|---|
| Dissoziation: | $2R\text{-}COOH \leftrightarrow 2R\text{-}COO^- + 2H^+$ | |
| Anode: | $2R\text{-}COO^- \rightarrow 2R\text{-}COO\cdot + 2e\cdot$ | (Oxidation) |
| | $2R\text{-}COO\cdot \rightarrow 2R\cdot + 2CO_2$ | |
| | $2R\cdot \rightarrow R\text{-}R$ | (Dimerisierung) |
| Kathode: | $2H^+ + 2e^- \rightarrow H^2$ | (Reduktion) |
| Gesamtreaktion: | $2R\text{-}COOH \rightarrow R\text{-}R + 2CO_2 + H_2$ | |

Die Reaktionsmechanismen an der Arbeitselektrode (Anode) und die möglichen Reaktionsprodukte, die aus radikalen und kationischen Intermediaten durch Ein-Elektronentransfer entstehen sind allgemein in Fig. 8A dargestellt.

Reaktionsschema $a_1$) stellt die Dimerisierung von zwei Radikalen, die nach einem ein-Elektronentransfer durch Decarboxylierung pro Molekül gebildet werden, also die klassische Kolbe-Elektrosynthese dar, wobei die Abstraktion eines Wasserstoffatoms durch das gebildete Radikal zum Alkanrest RH oder die Abspaltung eines Wasserstoffradikals unter Bildung des entsprechenden Olefins kommen eher selten vorkommen.

Reaktionsschema $a_2$) stellt einen Spezialfall der Kolbe-Elektrosynthese, nämlich die Kolbe-Elektrosynthese mit einer Mischung von zwei unterschiedlichen Fettsäuren, dar (siehe auch Beispiel in Fig. 8C). Aus den zwei gebildeten Radikalen werden durch C-C Kupplung die Dimere R1-R1 und R2-R2 sowie R1-R2, die durch die unsymmetrische Kupplung der beiden unterschiedlich großen Radikale R1 und R2 entstehen, gebildet. Hierbei führen $C_5$-$C_9$ bzw. $C_5$-$C_{12}$ Fettsäuregemische als Edukte zu kerosinähnlichen, lampenölähnlichen oder dieselähnlichen Produkten (siehe Figur 7A-C).

Das erforderliche Verhältnis der Fettsäuren in dem Eduktgemisch kann durch Voruntersuchungen vorhergesagt werden. Bei langkettigen FettsäureGemischen (> $C_{12}$) mischt man kurzkettige Fettsäuren in einem Verhältnis zu, das die Entstehung langkettiger Dimere unterdrückt und die Bildung von C-C Kupplungsprodukten aus lang- und kurzkettigen Radikalen fördert. So kann z.B. durch Kolbe-Elektrolyse aus Stearat ($C_{18}$) und Acetat ($C_2$) n-Octadecan ($C_{18}$), dimeres n-Oktadecan ($C_{34}$) und Ethan ($C_2$) entstehen (Figur 8C). Während der C18-Kohlenwasserstoff ein Bestandteil des Dieselgemisches ist, stellt der C34-Kohlenwasserstoff ein Paraffin mit hoher Viskosität dar, das als Kraftstoff ungeeignet ist. In diesem Fall wird durch die richtige Einstellung des Eduktverhältnisses die Entstehung des langkettigen Dimers aber auch die des Ethans unterdrückt.

**Beispiel 2 - Umwandlung von ungesättigten Fettsäuren zu ungesättigten Kohlenwasserstoffen mit der Kolbe-Elektrolyse**

Vor Durchführung des erfindungsgemäßen Verfahrens können ungesättigte Triglyceride oder Fettsäurealkylester durch katalytische Ethenolyse zu kurzkettigen Triglyceriden oder Estern und Olefinen umgewandelt werden. Dies kann zur preiswertigen Erzeugung von kurzkettigen Fettsäuren mit endständiger Doppelbindung verwendet werden, da nach der Ethenolyse durch die Kolbe-Dimerisierung endständige Diene erhalten werden. Möglich ist aber auch, die nach Verseifung von ungesättigten Triglyceriden oder Fettsäurealkylestern erhaltene ungesättigte Fettsäuren durch Kolbe-Elektrolyse zunächst zu langkettigen Olefinen zu dimerisieren und dann durch katalytische Ethenolyse in die kurzkettigen Olefine zu überführen.

Olefine können selbst oder im Gemisch mit Alkanen als wertvolle Kraftstoffe verwendet werden oder durch katalytische Hydrierung zu den entsprechenden Alkanen umgesetzt werden oder wiederum benutzt werden, um mit Kohlenstoffmonoxid durch Hydroformylierung (Oxosynthese) an Cobalt- und Rhodium-Katalysatoren Fettalkohole herzustellen. Die entstehenden Aldehyde können durch Hydrierung in Alkohole überführt werden. Die so gewonnen Alkohole werden auch Oxoalkohole genannt und können durch diesen Syntheseweg auch verzweigt und ungeradzahlig sein.

**Beispiel 3 - Umwandlung von gesättigten Fettsäuren zu ungesättigten Kohlenwasserstoffen, Ethern, Estern oder Alkoholen mit der Hofer-Moest-Elektrolyse**

Werden als Elektrodenmaterial beispielsweise Kohlenstoffelektroden (Graphit, Glaskohlenstoff) verwendet, so ist der Zwei-Elektronentransfer gegenüber dem Ein-Elektronentransfer begünstigt. Dies wiederrum bewirkt die Bildung von Kationen, die durch $H^+$-Eliminierung zu Olefinen oder durch nukleophile Addition von Lösungsmitteln wie Methanol oder Wasser zu den entsprechenden Ethern oder Alkoholen führen (Hofer-Moest-Elektrolyse). Besonders gut läuft die Hofer-Moest-Elektrolyse im alkalischen Bereich (pH > 7) ab.

Figur 8B stellt die möglichen Produkte der nicht-Kolbe-Elektrolyse (Hofer-Moest-Elektrotyse) dar. Das durch Zwei-Elektronentransfer und Decarboxylierung des Fettsäureanions gebildete Kation $R^+$ kann durch nukleophile Reagenzien, wie MeOH, das Alkylacetal selbst zur den entsprechende Ethern, Estern oder durch Einwirkung von $H_2O$ zu Alkoholen führen. Das gleiche kann auch nach einer Umlagerung des Kations $R^+$ zur $R'^+$ stattfinden. Besonders häufig ist die Abspaltung eines Protons $H^+$ aus dem Kation $R^+$, die zur der Bildung des entsprechenden Olefins führt.

**Beispiel 4 - Allgemeine Prozessführung der Kolbe-Elektrolyse**

10 L wässrige Lösung aus KOH und n-Alkansäure(n) bei pH 6,8-6,9 wird mit Hilfe einer Pumpe durch die Fluss-Zelle von unten nach oben vertikal transportiert. Bei einer konstanten Stromdichte von 1-2 $kA/m^2$ stellt sich eine Zellspannung von 3,02 - 5 V ein. Der Elektrolyt mit dem gebildeten Produkt wird in ein höher stehendes 1 L Gefäß geführt.

Die gebildeten Gase werden mittels schneller online-Gaschromatographie (GC) im ca. 2.5 min-Takt analysiert. Die oben stehende in der wässrigen Lösung unlösbare Produktphase nimmt eine Stunde nach dem Start der Elektrolyse kontinuierlich ab und mittels offline-GC analysiert.

Die wässrige Lösung wird in dem Eduktbehälter zurückgeführt. Auf diese Weise wird der Elektrolyt kontinuierlich durch den E-Reaktor über den 1 L Produktbehälter zurück in den 10 L Eduktbehälter kreisförmig umgepumpt. Während der Elektrolyse werden der pH-Wert, die Leitfähigkeit und der Fluss der Ladungsmengen kontinuierlich gemessen. Durch Edukt(en)-Zugabe werden sowohl die umgesetzte Eduktkonzentration ersetzt als auch der pH- und Leitfähigkeitswert konstant gehalten.

Die Pumpgeschwindigkeit des Elektrolyts wird so gewählt, dass die entstehenden Gase den E-Reaktor möglichst schnell verlassen, die Leitfähigkeit bei einem hohen Wert (14-18 $mS \cdot cm^{-1}$) bleibt und die Zellspannung die 5 V nicht überschreitet. Nähert sich das Verhältnis $CO_2/H_2$ der online gemessenen Produkte $CO_2$ und $H_2$ dem Wert 2 und registriert man nur Spuren von $O_2$ verläuft die Kolbe Elektrolyse sehr selektiv ohne die konkurrierende Wasserelektrolyse.

**Beispiel 5 - Elektrochemische Synthese von n-Oktan aus n-Pentansäure durch Kolbe-Elektrolyse.**

Bei einer konstanten Stromdichte von 1,44 $kA/m^2$ stellt sich eine Zellspannung von 3,02-4,6 V und ein $CO_2/H_2$-Verhältnis von 1,90-1,98 ein. Hierbei wird deutlich, dass obwohl eine Spannungsgrenze von 5V im Stromquellengerät vorgegeben wurde, diese vorgegebene Grenze bei einer Stromdichte von 1,44 $kA/m^2$ nicht erreicht wurde. Folglich konnte mit höheren Stromdichten gearbeitet werden bis eine Zellspannung von 5V erreicht wurde.

Der erreichte Umsatz war > 98%, die Stoffausbeute lag bei 87,5%, die Stromausbeute bei 85%, die Selektivität bei 89% und der Energiebedarf für den Erhalt des Produkts (n-Octan) bei 1,947 $kWh \cdot Kg^{-1}$.

**Beispiel 6 - Elektrochemische Synthese von Kerosin aus einer Mischung von n-Alkansäuren durch Kolbe-Elektrolyse.**

Entsprechend der allgemeinen Prozessführung (siehe Beispiel 3) wurde Kerosin aus einer Mischung von n-Hexansäure, n-Heptansäure, n-Oktansäure und n-Nonansäure und KOH in Wasser bei pH $\leq$ 7 (meistens pH= 6,8-6,9) durch Kolbe-Elektrolyse erhalten. (-COOH Aquiv. Konzentration zur KOH: 1,9-2, 1).

Figur 6 zeigt die durch offline-GC-MS gemessene Produktmischung. Figur 7A zeigt den Vergleich zwischen dem theoretisch berechneten (Soll) und dem experimentell erhaltenen Kerosin (Ist).

**Beispiel 7 - Elektrochemische Synthese von Diesel aus einer Mischung von n-Alkansäuren durch Kolbe Elektrolyse.**

Entsprechend der allgemeinen Prozessführung (siehe Beispiel 3) wurde Diesel aus einer Mischung von n-Pentansäure, n-Hexansäure, n-Heptansäure, n-Oktansäure und n-Nonansäure, n-Dekansäure, n-Undekansäure und KOH in Wasser bei pH $\leq$ 7 (meistens pH= 6,8-6,9) durch Kolbe-Elektrolyse erhalten (-COOH Aquiv. Konzentration zur KOH: 1,9-2, 1).

Figur 7B zeigt den Vergleich zwischen dem theoretisch berechneten (Soll) und dem experimentell erhaltenen Diesel (Ist).

**Beispiel 8 - Elektrochemische Synthese von Lampenöl aus einer Mischung von n-Alkansäuren durch Kolbe-Elektrolyse**

Entsprechend der allgemeinen Prozessführung (siehe Beispiel 3) wurde Lampenöl aus einer Mischung von Hexansäure, n-Heptansäure, n-Oktansäure, n-Nonansäure und n-Undekansäure und KOH in Wasser bei pH ≤ 7 (meistens pH = 6,8-6,9) durch Kolbe-Elektrolyse erhalten (-COOH Aquiv. Konzentration zur KOH: 1,9-2,1).

Figur 7C zeigt den Vergleich zwischen dem theoretisch berechneten (Soll) und dem experimentell erhaltenen Lampenöl (Ist).

## Patentansprüche

1. Verfahren zur elektrochemischen Umwandlung von Fettsäuren, insbesondere aus nachwachsenden Rohstoffen, durch Kolbe-Elektrolyse und/oder Hofer-Moest-Elektrolyse, umfassend die Schritte

   a) Bereitstellung eines wässrigen Elektrolyten in einem Behälter (1), wobei der wässrige Elektrolyt ein Alkalimetallsalz mindestens einer Fettsäure und Wasser, optional auch eine Fettsäure, aber keine organischen Lösungsmittel, enthält oder daraus besteht und eine elektrische Leitfähigkeit von ≥ 1 $mS \cdot cm^{-1}$ aufweist,
   b) Leiten des wässrigen Elektrolyten in einen elektrochemischen Reaktor (5), der mindestens eine Dünnschichtzelle mit mindestens einem Elektrodenpaar enthält oder daraus besteht, wobei das mindestens eine Elektrodenpaar eine Anode und eine Kathode enthält, die jeweils eine plane Oberfläche aufweisen und in einem Abstand von ≤ 200 µm zueinander angeordnet sind;
   c) Durchführung einer Kolbe-Elektrolyse und/oder Hofer-Moest-Elektrolyse des wässrigen Elektrolyten bei einer Stromstärke, die eine Zellspannung von 3 bis 30 V, vorzugsweise 3 bis 5 V ergibt, wobei Elektrolyseprodukte entstehen;
   d) Leiten der Elektrolyseprodukte in einen Produktmischungsbehälter (6).

2. Verfahren gemäß Anspruch 1, **dadurch gekennzeichnet, dass** der wässrige Elektrolyt

   i) vertikal entgegen der Schwerkraft durch den elektrochemischen Reaktor (5) geleitet wird und/oder die Elektrolyseprodukte vertikal entgegen der Schwerkraft aus dem elektrochemischen Reaktor (5) geleitet werden; und/oder
   ii) Alkalimetallsalze von Fettsäuren, und optional Fettsäuren, in einer Konzentration von mehr als 0,1 mol/L, bevorzugt 0,2 mol/L bis 2 mol/L, insbesondere 1 bis 1,15 mol/L, enthält; und/oder
   iii) keine Leitsalze, insbesondere keine anorganischen Leitsalze, enthält; und/oder
   iv) keine Phasentransferzusatzstoffe enthält; und/oder
   v) als Lösung oder Emulsion vorliegt, wobei die Emulsion bevorzugt durch Rühren oder Mischen des Elektrolyts mittels Mischer (22), insbesondere eines Mikromischers, hergestellt wird.

3. Verfahren gemäß einem der vorhergehenden Ansprüche, **dadurch gekennzeichnet, dass** der wässrige Elektrolyt durch Zugabe von Fettsäure oder Fettsäurealkalimetallsalz

   i) auf pH ≤ 7, bevorzugt pH 6 bis 7, besonders bevorzugt pH 6,7 bis 6,9, eingestellt wird und/oder auf eine elektrische Leitfähigkeit von ≥ 1 $cm^{-1}$, bevorzugt von ≥ 14 $mS \cdot cm^{-1}$, eingestellt wird, um überwiegend Alkane der Fettsäuren als Elektrolyseprodukte zu erhalten; oder
   ii) auf pH > 7 bis 8,7 eingestellt wird und/oder auf eine elektrische Leitfähigkeit von ≥ 5 $mS \cdot cm^{-1}$, bevorzugt von ≥ 17 $mS \cdot cm^{-1}$, eingestellt wird, um überwiegend Olefine der Fettsäuren als Elektrolyseprodukte zu erhalten; oder
   iii) auf pH > 8,7 eingestellt wird und/oder auf eine elektrische Leitfähigkeit von ≥ 5 $mS \cdot cm^{-1}$, vorzugsweise ≥ 17 $mS \cdot cm^{-1}$, besonders bevorzugt von > 17 bis 23 $mS \cdot cm^{-1}$, eingestellt wird, um überwiegend Alkohole der Fettsäuren als Elektrolyseprodukte zu erhalten.

4. Verfahren gemäß einem der vorhergehenden Ansprüche, **dadurch gekennzeichnet, dass** die

   i) Kathode und/oder Anode Platin, platinierte Substrate, bevorzugt platinierter Edelstahl und/oder platiniertes Titan, Glaskohlenstoff, Graphit, Titan und/oder Nickel, bevorzugt Platin, enthält oder daraus besteht; und/oder
   ii) Kathode und/oder Anode ein mit dotiertem Diamant, bevorzugt Bor-dotiertem Diamant, beschichtetes, elektrisch leitfähiges Substrat enthält oder daraus besteht, wobei es sich bei dem Substrat bevorzugt um Platin, Edelstahl, Titan, Glaskohlenstoff, Graphit und/oder Nickel handelt; und/oder
iii) Kathode und/oder Anode monopolar arbeitet; und/oder
iv) Kathode und Anode in einem Toleranzbereich von ± 1 μm, bevorzugt ± 0,5 μm, besonders bevorzugt ± 0,1 μm, insbesondere ± 0,05 μm, den gleichen Abstand aufweisen.

**5.** Verfahren gemäß einem der vorhergehenden Ansprüche, **dadurch gekennzeichnet, dass** aus dem Produktmischungsbehälter (6)

i) eine auf dem wässrigen Elektrolyt schwimmende Phase, welche die umgewandelte Fettsäuren als Elektrolyseprodukte enthält, in einen Produktsammelbehälter (20) abgeführt wird; und/oder
ii) eine Gasproduktphase, welche insbesondere Wasserstoff und Kohlendioxid enthält, teilweise zu einer Gaschromatographieanlage abgeführt wird, wobei in der Gaschromatographieanlage bevorzugt eine Gaschromatographie der Gasproduktphase durchgeführt wird, insbesondere in einem Takt von 2-3 Minuten; und/oder
iii) eine Gasproduktphase, welche Wasserstoff und Kohlendioxid enthält, abgeführt wird, in Wasserstoff und Kohlendioxid getrennt wird und Wasserstoff und Kohlendioxid getrennt in Sammelflaschen (14, 15) gespeichert werden; und/oder
iv) die Phase (7) des wässrigen Elektrolyten in den Behälter (1) aus Schritt a) zurückgeführt wird.

**6.** Verfahren gemäß einem der vorhergehenden Ansprüche, **dadurch gekennzeichnet, dass** in Schritt b) der wässrige Elektrolyt über mindestens einen Leitfähigkeitsmesssensor (3) und/oder mindestens ein pH-Messsensor (4) in den elektrochemischen Reaktor (5) geleitet wird, wobei bevorzugt während des Verfahrens kontinuierlich die Leitfähigkeit und der pH-Wert gemessen wird.

**7.** Verfahren gemäß einem der vorhergehenden Ansprüche, **dadurch gekennzeichnet, dass**

i) die mindestens eine Fettsäure ausgewählt ist aus der Gruppe bestehend aus unsubstituierter oder substituierter n-Pentansäure, n-Hexansäure, n-Heptansäure, n-Oktansäure, n-Nonansäure, n-Dekansäure, n-Undekansäure, und Mischungen hiervon, optional n-Hexansäure, n-Heptansäure, n-Oktansäure, n-Nonansäure und Mischungen hiervon; und/oder
ii) das Alkalimetallsalz der mindestens einen Fettsäure ein Kaliumsalz, Lithiumsalz und/oder Natriumsalz der mindestens einen Fettsäure ist.

**8.** Verfahren gemäß einem der vorhergehenden Ansprüche, **dadurch gekennzeichnet, dass** die Kolbe-Elektrolyse und/oder Hofer-Moest-Elektrolyse

i) mit regenerativ erzeugtem elektrischen Strom durchgeführt wird, bevorzugt Strom, der durch Windkraft, Wasserkraft und/oder Sonnenstrahlung, besonders bevorzugt Strom, der durch Windkraft, Wasserkraft und/oder Sonnenstrahlung in Phasen der temporären Stromüberproduktion, erzeugt wurde; und/oder
ii) bei einer Stromdichte von 1 bis 10 $kA/m^2$, bevorzugt 1,1 bis 5 $kA/m^2$, besonders bevorzugt 1,2 bis 3 $kA/m^2$, insbesondere 1,3 bis 1,5 $kA/m^2$ durchgeführt wird; und/oder
iii) mit Gleichstrom und/oder Gleichspannung betrieben wird.

**9.** Anlage zur Durchführung des Verfahrens gemäß einem der vorhergehenden Ansprüche, wobei die Anlage

a) einen Behälter (1) für einen wässrigem Elektrolyt,
b) einen elektrochemischen Reaktor (5), der mindestens eine Dünnschichtzelle mit mehreren Elektrodenpaaren enthält oder daraus besteht, wobei die Elektrodenpaare eine Anode und eine Kathode enthalten, die jeweils eine plane Oberfläche aufweisen und in einem Abstand von ≤ 200 μm zueinander angeordnet sind;
c) eine Stromquelle (18) zur Durchführung einer Kolbe-Elektrolyse oder Hofer-Moest-Elektrolyse des wässrigen Elektrolyten in dem elektrochemischen Reaktor (5), wobei die Stromquelle (18) elektrisch mit dem elektrochemischen Reaktor (5) verbunden ist;
d) einen Produktmischungsbehälter (6) zur Aufnahme der Elektrolyseprodukte, wobei der Produktmischungsbehälter (6) über eine fluidische Verbindung mit dem elektrochemischen Reaktor (5) verbunden ist und über eine weitere fluidische Verbindung (12) mit dem Behälter (1) verbunden ist;
enthält oder daraus besteht, **dadurch gekennzeichnet, dass** die Kathoden und Anoden elektrisch parallel kontaktiert sind und der Behälter (1) wässrigen Elektrolyt enthält, der eine Mischung aus mindestens einer Fettsäure, einem Alkalimetallsalz der mindestens einen Fettsäure und Wasser, aber keine organischen Lösungsmittel, enthält oder daraus besteht und eine elektrische Leitfähigkeit von ≥1 $mS \cdot cm^{-1}$ aufweist.

**10.** Anlage gemäß Anspruch 9, **dadurch gekennzeichnet, dass** der elektrochemische Reaktor (5) an einer unteren, bodennahen Stelle fluidisch mit dem Behälter (1) verbunden ist und/oder an einer oberen, bodenfernen Stelle fluidisch mit dem Produktmischungsbehälter (6) verbunden ist.

**11.** Anlage gemäß einem der Ansprüche 9 oder 10, **dadurch gekennzeichnet, dass** die

i) Kathode und/oder Anode Platin, platinierte Substrate, bevorzugt platinierter Edelstahl und/oder platiniertes Titan, Glaskohlenstoff, Graphit und/oder Nickel, bevorzugt Platin, enthält oder daraus besteht; und/oder
ii) Kathode und/oder Anode ein mit dotiertem Diamant, bevorzugt Bor-dotiertem Diamant, beschichtetes, elektrisch leitfähiges Substrat enthält oder daraus besteht, wobei es sich bei dem Substrat bevorzugt um Platin, Edelstahl, Titan, Glaskohlenstoff, Graphit und/oder Nickel handelt; und/oder
iii) Kathode und Anode einen Abstand von ≤ 100 µm zueinander aufweisen und/oder in einem Toleranzbereich von ± 5 µm, bevorzugt ± 2 µm, beson-ders bevorzugt ± 1 µm, insbesondere ± 0,1 µm, den gleichen Abstand aufweisen.

**12.** Anlage gemäß einem der Ansprüche 9 bis 11, **dadurch gekennzeichnet, dass** die fluidische Verbindung (12) zwischen Behälter (1) und elektrochemischem Reaktor (5) mindestens ein Leitfähigkeitsmesssensor (3) und/oder mindestens ein pH-Messsensor (4) enthält, wobei die fluidische Verbindung (12) optional eine Förderpumpe (2) mit Fluss- und Druckcontroller enthalten kann.

**13.** Anlage gemäß einem der Ansprüche 9 bis 12, **dadurch gekennzeichnet, dass** die Stromquelle (18)

i) derart konfiguriert ist, dass eine Zellspannung von 3 bis 30 V, besonders von 3 bis 5 V, aufrechterhalten wird; und/oder
ii) dazu konfiguriert ist, eine Stromdichte von 1 bis 10 $kA/m^2$, bevorzugt 1,1 bis 5 $kA/m^2$, besonders bevorzugt 1,2 bis 3 $kA/m^2$, insbesondere 1,3 bis 1,5 $kA/m^2$, zu erzeugen; und/oder
iii) über einen Amperestundenzähler (17) mittels Shunt (19) mit dem elektrochemischen Reaktor (5) verbunden ist; und/oder
iv) dazu konfiguriert ist, einen Gleichstrom und/oder eine Gleichspannung zu erzeugen.

**14.** Anlage gemäß einem der Ansprüche 9 bis 13, **dadurch gekennzeichnet, dass** der Behälter (1) über eine fluidische Leitung mit einem Vorratsgefäß (16) verbunden ist, das bevorzugt wässrigen Elektrolyten enthält, wobei die fluidische Leitung besonders bevorzugt eine Förderpumpe (2) mit Fluss- und Druckcontroller enthält.

**15.** Anlage gemäß einem der Ansprüche9 bis 14, **dadurch gekennzeichnet, dass** der Produktmischungsbehälter (6) in einer oberen, bodenfernen Stelle eine fluidische Leitung (10) zu einer Gaschromatographieanlage und/oder eine fluidische Leitung (9) zu einer $H_2/CO_2$-Trennvorrichtung (13) zur Speicherung von $H_2$ und $CO_2$ mit geringen Anteilen von an $C_2$-$C_4$ Kohlenwasserstoffen in Sammelflaschen (14, 15) enthält.

## Claims

**1.** A process for the electrochemical conversion of fatty acids, in particular from renewable raw materials, by Kolbe electrolysis and/or Hofer-Moest electrolysis, comprising the steps

a) providing an aqueous electrolyte in a tank (1), wherein the aqueous electrolyte comprises or consists of an alkali metal salt of at least one fatty acid and water, optionally also a fatty acid, but no organic solvents, and has an electrical conductivity of ≥ 1 $mS \cdot cm^{-1}$,
b) passing the aqueous electrolyte into an electrochemical reactor (5) which comprises or consists of at least one thin-film cell with at least one pair of electrodes, wherein the at least one pair of electrodes comprises an anode and a cathode which each have a planar surface and are arranged at a distance of ≤ 200 µm from each other;
c) performing a Kolbe electrolysis and/or Hofer-Moest electrolysis of the aqueous electrolyte at a current intensity which yields a cell voltage of 3 to 30 V, preferably 3 to 5 V, with electrolysis products being produced;
d) passing the electrolysis products into a product mixture tank (6).

**2.** A process according to Claim 1, **characterised in that** the aqueous electrolyte

i) is passed vertically counter to the force of gravity through the electrochemical reactor (5) and/or the electrolysis products are passed vertically counter to the force of gravity out of the electrochemical reactor (5); and/or
ii) comprises alkali metal salts of fatty acids, and optionally fatty acids, in a concentration of more than 0.1 mol/l, preferably 0.2 mol/l to 2 mol/l, in particular 1 to 1.15 mol/l; and/or
iii) does not contain any conducting salts, in particular any inorganic conducting salts; and/or
iv) does not contain any phase-transfer additives; and/or
v) is present as a solution or emulsion, the emulsion preferably being produced by stirring or mixing the electrolyte by means of mixers (22), in particular a micromixer.

**3.** A process according to one of the preceding claims, **characterised in that** the aqueous electrolyte, by addition of fatty acid or fatty-acid alkali metal salt,

i) is set to pH $\leq 7$, preferably pH 6 to 7, particularly preferably pH 6.7 to 6.9, and/or is set to an electrical conductivity of $\geq 1\ cm^{-1}$, preferably of $\geq 14\ mS \cdot cm^{-1}$, in order to obtain predominantly alkanes of the fatty acids as electrolysis products; or
ii) is set to pH > 7 to 8.7 and/or is set to an electrical conductivity of $\geq 5\ mS \cdot cm^{-1}$, preferably of $\geq 17\ mS \cdot cm^{-1}$, in order to obtain predominantly olefins of the fatty acids as electrolysis products; or
iii) is set to pH > 8.7 and/or is set to an electrical conductivity of $\geq 5\ mS \cdot cm^{-1}$, preferably $\geq 17\ mS \cdot cm^{-1}$, particularly preferably of > 17 to 23 $mS \cdot cm^{-1}$, in order to obtain predominantly alcohols of the fatty acids as electrolysis products.

**4.** A process according to one of the preceding claims, **characterised in that** the

i) cathode and/or anode comprises or consists of platinum, platinised substrates, preferably platinised high-grade steel and/or platinised titanium, glassy carbon, graphite, titanium and/or nickel, preferably platinum; and/or
ii) cathode and/or anode comprises or consists of an electrically conductive substrate coated with doped diamond, preferably boron-doped diamond, the substrate preferably being platinum, high-grade steel, titanium, glassy carbon, graphite and/or nickel; and/or
iii) cathode and/or anode operate in monopolar manner; and/or
iv) cathode and anode are equidistant within a tolerance range of $\pm$ 1 $\mu$m, preferably $\pm$ 0.5 $\mu$m, particularly preferably $\pm$ 0.1 $\mu$m, in particular $\pm$ 0.05 $\mu$m.

**5.** A process according to one of the preceding claims, **characterised in that** from the product mixture tank (6)

i) a phase which floats on the aqueous electrolyte and which comprises the converted fatty acids as electrolysis products is discharged into a product collection tank (20); and/or
ii) a gas product phase, which comprises in particular hydrogen and carbon dioxide, is partially discharged to a gas chromatography system, with preferably gas chromatography of the gas product phase being performed in the gas chromatography system, in particular in a cycle of 2-3 minutes; and/or
iii) a gas product phase which comprises hydrogen and carbon dioxide is discharged, is separated into hydrogen and carbon dioxide, and hydrogen and carbon dioxide are stored separately in collecting bottles (14, 15); and/or
iv) the phase (7) of the aqueous electrolyte is returned into the tank (1) of step a).

**6.** A process according to one of the preceding claims, **characterised in that** in step b) the aqueous electrolyte is passed into the electrochemical reactor (5) via at least one conductivity measuring sensor (3) and/or at least one pH measuring sensor (4), with preferably the conductivity and the pH value being measured continuously during the process.

**7.** A process according to one of the preceding claims, **characterised in that**

i) the at least one fatty acid is selected from the group consisting of non-substituted or substituted n-pentanoic acid, n-hexanoic acid, n-heptanoic acid, n-octanoic acid, n-nonanoic acid, n-decanoic acid, n-undecanoic acid, and mixtures thereof, optionally n-hexanoic acid, n-heptanoic acid, n-octanoic acid, n-nonanoic acid and mixtures thereof; and/or
ii) the alkali metal salt of the at least one fatty acid is a potassium salt, lithium salt and/or sodium salt of the at least one fatty acid.

**8.** A process according to one of the preceding claims, **characterised in that** the Kolbe electrolysis and/or Hofer-Moest electrolysis

i) is performed with regeneratively generated electric current, preferably current which has been produced by wind power, hydroelectric power and/or solar radiation, particularly preferably current which has been produced by wind power, water power and/or solar radiation in phases of temporary overproduction of current; and/or
ii) is performed at a current density of 1 to 10 $kA/m^2$, preferably 1.1 to 5 $kA/m^2$, particularly preferably 1.2 to 3 $kA/m^2$, in particular 1.3 to 1.5 $kA/m^2$; and/or
iii) is operated with direct current and/or DC voltage.

**9.** An installation for performing the process according to one of the preceding claims, wherein the installation comprises or consists of

a) a tank (1) for an aqueous electrolyte,
b) an electrochemical reactor (5) which comprises or consists of at least one thin-film cell with a plurality of pairs of electrodes, the pairs of electrodes comprising an anode and a cathode which each have a planar surface and are arranged at a distance of $\leq 200\ \mu m$ from each other;
c) a current source (18) for performing a Kolbe electrolysis or Hofer-Moest electrolysis of the aqueous electrolyte in the electrochemical reactor (5), the current source (18) being electrically connected to the electrochemical reactor (5);
d) a product mixture tank (6) for receiving the electrolysis products, the product mixture tank (6) being connected to the electrochemical reactor (5) via a fluidic connection and being connected to the tank (1) via a further fluidic connection (12);
**characterised in that** the cathodes and anodes are contacted electrically in parallel and the tank (1) comprises aqueous electrolyte which comprises or consists of a mixture of at least one fatty acid, an alkali metal salt of the at least one fatty acid and water, but no organic solvents, and has an electrical conductivity of $> 1\ mS \cdot cm^{-1}$.

**10.** An installation according to Claim 9, **characterised in that** the electrochemical reactor (5) is fluidically connected to the tank (1) at a lower point close to the ground and/or is connected fluidically to the product mixture tank (6) at an upper point remote from the ground.

**11.** An installation according to one of Claims 9 or 10, **characterised in that** the

i) cathode and/or anode comprises or consists of platinum, platinised substrates, preferably platinised high-grade steel and/or platinised titanium, glassy carbon, graphite and/or nickel, preferably platinum; and/or
ii) cathode and/or anode comprises or consists of an electrically conductive substrate coated with doped diamond, preferably boron-doped diamond, the substrate preferably being platinum, high-grade steel, titanium, glassy carbon, graphite and/or nickel; and/or
iii) cathode and anode are at a distance of $\leq 100\ \mu m$ from each other and/or are equidistant within a tolerance range of $\pm\ 5\ \mu m$, preferably $\pm\ 2\ \mu m$, particularly preferably $\pm\ 1\ \mu m$, in particular $\pm\ 0.1\ \mu m$.

**12.** An installation according to one of Claims 9 to 11, **characterised in that** the fluidic connection (12) between the tank (1) and electrochemical reactor (5) comprises at least one conductivity measuring sensor (3) and/or at least one pH measuring sensor (4), wherein the fluidic connection (12) can optionally comprise a feed pump (2) with a flow and pressure controller.

**13.** An installation according to one of Claims 9 to 12, **characterised in that** the current source (18)

i) is configured such that a cell voltage of 3 to 30 V, particularly of 3 to 5 V, is maintained; and/or
ii) is configured to generate a current density of 1 to 10 $kA/m^2$, preferably 1.1 to 5 $kA/m^2$, particularly preferably 1.2 to 3 $kA/m^2$, in particular 1.3 to 1.5 $kA/m^2$; and/or
iii) is connected to the electrochemical reactor (5) via an amperehour meter (17) by means of a shunt (19); and/or
iv) is configured to generate a direct current and/or a DC voltage.

**14.** An installation according to one of Claims 9 to 13, **characterised in that** the tank (1) is connected via a fluidic line to a storage vessel (16), which preferably comprises aqueous electrolyte, wherein the fluidic line particularly preferably comprises a feed pump (2) with a flow and pressure controller.

**15.** An installation according to one of Claims 9 to 14, **characterised in that** the product mixture tank (6) in an upper point remote from the ground comprises a fluidic line (10) to a gas chromatography system and/or a fluidic line (9) to an $H_2/CO_2$ separation device (13) for storing $H_2$ and $CO_2$ with low contents of $C_2$-$C_4$ hydrocarbons in collecting bottles (14, 15).

## Revendications

**1.** Procédé de conversion électrochimique d'acides gras, provenant en particulier de matières premières renouvelables, par électrolyse de Kolbe et/ou par électrolyse de Hofer-Moest, comprenant les étapes suivantes :

a) fourniture d'un électrolyte aqueux dans un récipient (1), l'électrolyte aqueux contenant, ou étant constitué de, un sel d'un métal alcalin d'au moins un acide gras et de l'eau, en option aussi un acide gras, mais ne contenant aucun solvant organique, et présentant une conductivité électrique $\geq$ 1 mS.cm$^{-1}$,
b) envoi de l'électrolyte aqueux dans un réacteur électrochimique (5), qui contient, ou est constitué de, au moins une cellule à couches minces comportant au moins une paire d'électrodes, l'au moins une paire d'électrodes contenant une anode et une cathode, dont chacune présente une surface plane et qui sont disposées à une distance $\leq$ 200 $\mu$m l'une de l'autre ;
c) mise en oeuvre d'une électrolyse de Kolbe et/ou d'une électrolyse de Hofer-Moest de l'électrolyte aqueux pour une intensité de courant qui conduit à une tension de cellule de 3 à 30 V, de préférence de 3 à 5 V, avec formation de produits d'électrolyse ;
d) envoi des produits d'électrolyse dans un récipient (6) destiné au mélange de produits.

**2.** Procédé selon la revendication 1, **caractérisé en ce que** l'électrolyte aqueux

i) est envoyé verticalement, à l'encontre de la force de gravité, dans le réacteur électrochimique (5), et/ou les produits d'électrolyse sont évacués verticalement, à l'encontre de la force de gravité, du réacteur électrochimique (5) ; et/ou
ii) contient des sels de métaux alcalins d'acides gras, et en option des acides gras, à une concentration supérieure à 0,1 mol/L, de préférence de 0,2 mol/L à 2 mol/L, en particulier de 1 à 1,15 mol/L ; et/ou
iii) ne contient aucun sel conducteur, en particulier aucun sel conducteur inorganique ; et/ou
iv) ne contient aucun additif de transfert de phase ; et/ou
v) se présente sous forme d'une solution ou d'une émulsion, l'émulsion étant fabriquée de préférence par agitation ou mélange de l'électrolyte à l'aide d'un mélangeur (22), en particulier d'un micro-mélangeur.

**3.** Procédé selon l'une des revendications précédentes, **caractérisé en ce que** l'électrolyte aqueux est, par addition d'un acide gras ou d'un sel de métaux alcalins d'acides gras,

i) ajusté à pH $\leq$ 7, de préférence à pH 6 à 7, d'une manière particulièrement préférée à pH 6,7 à 6,9, et/ou ajusté à une conductivité électrique $\geq$ 1 mS.cm$^{-1}$, de préférence $\geq$ 14 mS.cm$^{-1}$, pour donner principalement des alcanes des acides gras en tant que produits d'électrolyse ; ou
ii) ajusté à pH > 7 à 8,7, et/ou ajusté à une conductivité électrique $\geq$ 5 mS.cm$^{-1}$, de préférence $\geq$ 17 mS.cm$^{-1}$, pour donner principalement des oléfines des acides gras en tant que produits d'électrolyse ; ou
iii) ajusté à pH > 8,7 et/ou ajusté à une conductivité électrique $\geq$ 5 mS.cm$^{-1}$, de préférence $\geq$ 17 mS.cm$^{-1}$, d'une manière particulièrement préférée > 17 à 23 mS.cm$^{-1}$, pour donner principalement des alcools des acides gras en tant que produits d'électrolyse.

**4.** Procédé selon l'une des revendications précédentes, **caractérisé en ce que**

i) la cathode et/ou l'anode contiennent du platine, des substrats platinés, de préférence de l'acier inoxydable platiné et/ou du titane platiné, du carbone vitreux, du graphite, du titane et/ou du nickel, de préférence du platine, ou en sont constituées ; et/ou
ii) la cathode et/ou l'anode contiennent une couche conductrice de l'électricité, revêtue de diamant dopé, de préférence de diamant dopé par du bore, ou en sont constituées, auquel cas, pour ce qui concerne le substrat, il s'agit de préférence de platine, d'acier inoxydable, de titane, de carbone vitreux, de graphite et/ou de nickel ; et/ou
iii) la cathode et/ou l'anode fonctionnent en mode monopolaire ; et/ou
iv) la cathode et l'anode présentent la même distance, dans une plage de tolérance de $\pm$ 1 $\mu$m, de préférence

de ± 0,5 μm, d'une manière particulièrement préférée de ± 0,1 μm, en particulier de ± 0,05 μm.

**5.** Procédé selon l'une des revendications précédentes **caractérisé en ce que**

i) on évacue du récipient de mélange de produits (6), une phase, surnageant sur l'électrolyte aqueux, qui contient en tant que produits d'électrolyse les acides gras non convertis, pour l'envoyer dans un récipient collecteur de produits (20) ; et/ou
ii) on évacue partiellement du récipient de mélange de produits (6), une phase produits gazeux, qui contient en particulier de l'hydrogène et du dioxyde de carbone, pour l'envoyer dans une installation de chromatographie en phase gazeuse, une chromatographie en phase gazeuse de la phase produits gazeux étant mise en oeuvre de préférence dans l'installation de chromatographie en phase gazeuse, en particulier selon un cycle de 2 à 3 minutes ; et/ou
iii) on évacue du récipient de mélange de produits (6) une phase produits gazeux, qui contient de l'hydrogène et du dioxyde de carbone, on sépare cette phase en hydrogène et en dioxyde de carbone, et on stocke séparément dans des flacons collecteurs (14, 15) l'hydrogène et le dioxyde de carbone ; et/ou
iv) on renvoie la phase (7) de l'électrolyte aqueux dans le récipient (1) de l'étape a).

**6.** Procédé selon l'une des revendications précédentes, **caractérisé en ce que**, dans l'étape b), on envoie l'électrolyte aqueux dans le réacteur électrochimique (5), en le faisant passer par au moins un capteur (3) de mesure de la conductivité et/ou par au moins un capteur (4) de mesure du pH, la conductivité et le pH étant de préférence mesurés en continu pendant le procédé.

**7.** Procédé selon l'une des revendications précédentes, **caractérisé en ce que**

i) l'au moins un acide gras est choisi dans le groupe consistant en les acides, non substitués ou substitués, que sont l'acide n-pentanoïque, l'acide n-hexanoïque, l'acide n-heptanoïque, l'acide n-octanoïque, l'acide n-nonanoïque, l'acide n-décanoïque, l'acide n-undécanoïque et les mélanges de ceux-ci, en option l'acide n-hexanoïque, l'acide n-heptanoïque, l'acide n-octanoïque, l'acide n-nonanoïque et les mélanges de ceux-ci ; et/ou
ii) le sel d'un métal alcalin de l'au moins un acide gras est un sel de potassium, un sel de lithium et/ou un sel de sodium de l'au moins un acide gras.

**8.** Procédé selon l'une des revendications précédentes, **caractérisé en ce que** l'électrolyse de Kolbe et/ou l'électrolyse de Hofer-Moest

i) sont mises en oeuvre avec un courant électrique produit au moyen d'une énergie renouvelable, qui a été produit par énergie éolienne, par énergie hydraulique et/ou par un rayonnement solaire, de préférence avec un courant qui a été produit par énergie éolienne, par énergie hydraulique et/ou par un rayonnement solaire, au cours des phases de la surproduction temporaire de courant ; et/ou
ii) sont mises en oeuvre pour une densité de courant de 1 à 10 $kA/m^2$, de préférence de 1,1 à 5 $kA/m^2$, d'une manière particulièrement préférée de 1,2 à 3 $kA/m^2$, en particulier de 1,3 à 1,5 $kA/m^2$ ; et/ou
iii) sont exploitées en courant continu et/ou en tension continue.

**9.** Installation pour la mise en oeuvre du procédé selon l'une des revendications précédentes, l'installation contenant, ou étant constituée de :

a) un récipient (1) pour un électrolyte aqueux,
b) un réacteur électrochimique (5), qui contient, ou est constitué de, au moins une cellule à couches minces comportant plusieurs paires d'électrodes, les paires d'électrodes contenant chacune une anode et une cathode, dont chacune présente une surface plane, et qui sont disposées à une distance ≤ 200 μm l'une de l'autre ;
c) une source de courant (18) pour la mise en oeuvre d'une électrolyse de Kolbe ou une électrolyse de Hofer-Moest de l'électrolyte aqueux dans le réacteur électrochimique (5), la source de courant (18) étant électriquement reliée au réacteur électrochimique (5) ;
d) un récipient de mélange de produits (6), pour recevoir les produits d'électrolyse, le récipient de mélange de produits (6) étant relié au réacteur électrochimique (5) par une liaison fluidique, et étant relié au récipient (1) par une autre liaison fluidique (12) ;
**caractérisée en ce que** les cathodes et les anodes sont mises en contact électrique en parallèle les unes avec les autres, et le récipient (1) contient un électrolyte aqueux, qui contient, ou est constitué de, un mélange d'au moins un acide gras, d'un sel d'un métal alcalin de l'au moins un acide gras et d'eau, mais ne contient aucun solvant organique, et présente une conductivité électrique ≥ 1 $mS.cm^{-1}$.

**10.** Installation selon la revendication 9, **caractérisée en ce que** le réacteur électrochimique (5) est, en un point inférieur situé près du sol, relié au récipient (1) par liaison fluidique, et/ou, en un point supérieur éloigné du sol, relié au récipient de mélange de produits (6) par une liaison fluidique.

**11.** Installation selon la revendication 9 ou 10, **caractérisée en ce que**

i) la cathode et/ou l'anode contiennent du platine, des substrats platinés, de préférence de l'acier inoxydable platiné et/ou du titane platiné, du carbone vitreux, du graphite et/ou du nickel, de préférence du platine, ou en sont constituées ; et/ou
ii) la cathode et/ou l'anode contiennent une couche conductrice de l'électricité, revêtue de diamant dopé, de préférence de diamant dopé par du bore, ou en sont constituées, auquel cas, pour ce qui concerne le substrat, il s'agit de préférence de platine, d'acier inoxydable, de titane, de carbone vitreux, de graphite et/ou de nickel ; et/ou
iii) la cathode et l'anode se trouvent à une distance ≤ 100 μm l'une de l'autre et/ou présentent la même distance, pour une plage de tolérance de ± 5 μm, de préférence de ± 2 μm, d'une manière particulièrement préférée de ± 1 μm, en particulier de ± 0,1 μm.

**12.** Installation selon l'une des revendications 9 à 1, **caractérisée en ce que** la liaison fluidique (12) entre le récipient (1) et le réacteur électrochimique (5) contient au moins un capteur (3) de mesure de la conductivité et/ou au moins un capteur (4) de mesure du pH, la liaison fluidique (12) pouvant contenir en option une pompe d'alimentation (2) munie d'un régulateur de débit et de pression.

**13.** Installation selon l'une des revendications 9 à 12, **caractérisée en ce que** la source de courant (18)

i) est conçue de façon à maintenir une tension de cellule de 3 à 30 V, en particulier de 3 à 5 V ; et/ou
ii) est configurée de façon à produire une densité de courant de 1 à 10 $kA/m^2$, de préférence de 1,1 à 5 $kA/m^2$, d'une manière particulièrement préférée de 1,2 à 3 $kA/m^2$, en particulier de 1,3 à 1,5 $kA/m^2$ ; et/ou
iii) est reliée au réacteur électrochimique (5) par l'intermédiaire d'un compteur (17) d'ampères-heures (17) à l'aide d'un Shunt (19) ; et/ou
iv) est conçue de façon à produire un courant continu et/ou une tension continue.

**14.** Installation selon l'une des revendications 9 à 13, **caractérisée en ce que** le récipient (1) est relié par une conduite fluidique à un réservoir (16), qui de préférence contient des électrolytes aqueux, la conduite fluidique contenant d'une manière particulièrement préférée une pompe d'alimentation (2) pourvue d'un régulateur de débit et de pression.

**15.** Installation selon l'une des revendications 9 à 14, **caractérisée en ce que** le récipient de mélange de produits (6) contient, en un point supérieur éloigné du sol, une conduite fluidique (10) conduisant à une installation de chromatographie en phase gazeuse et/ou une conduite fluidique (9) conduisant à un dispositif de séparation $H_2/CO_2$ (13), pour le stockage de $H_2$ et de $CO_2$ dans des flacons collecteurs (14, 15), avec de faibles quantités d'hydrocarbures en $C_2$-$C_4$.

Figur 1

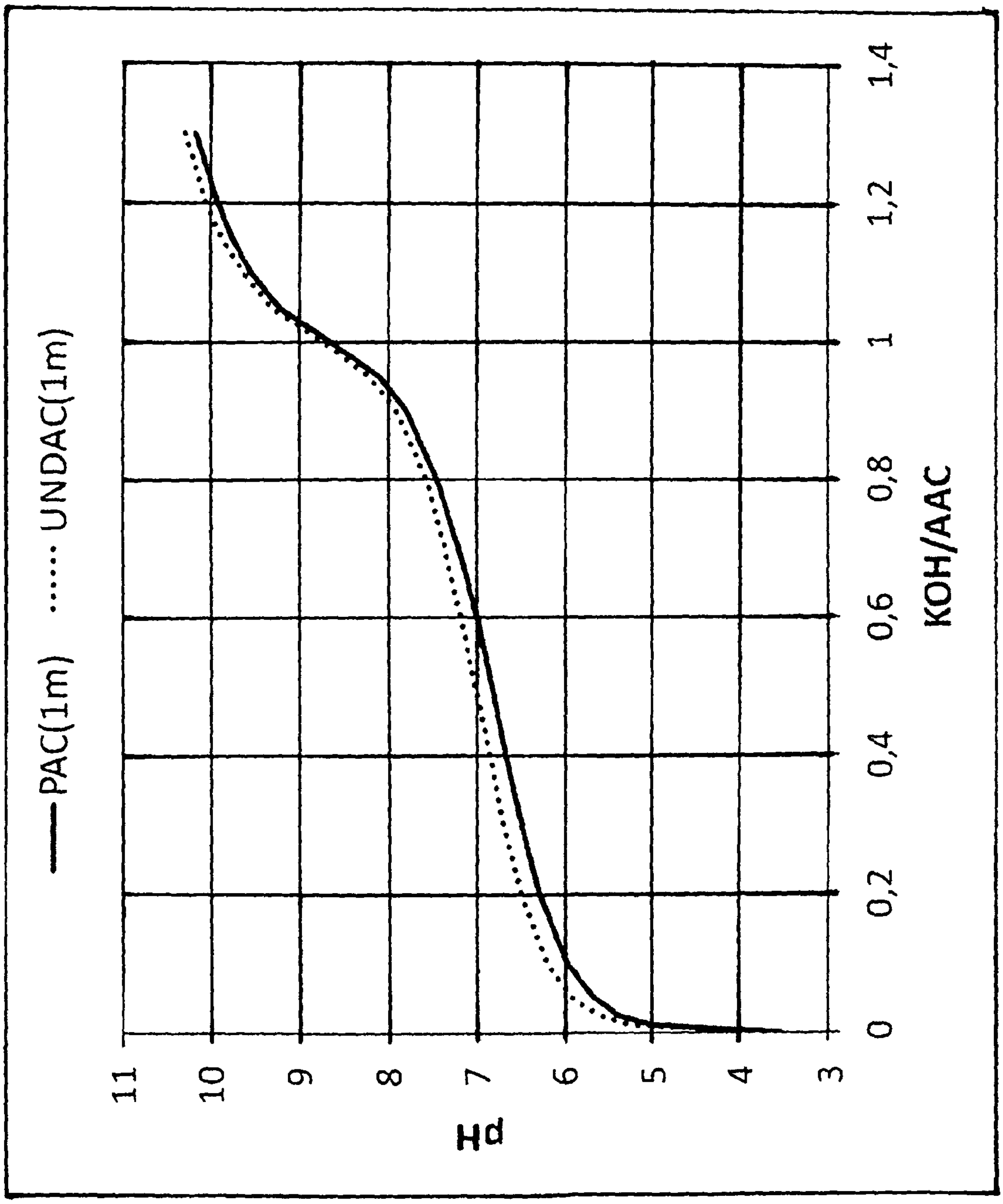

Figur 2

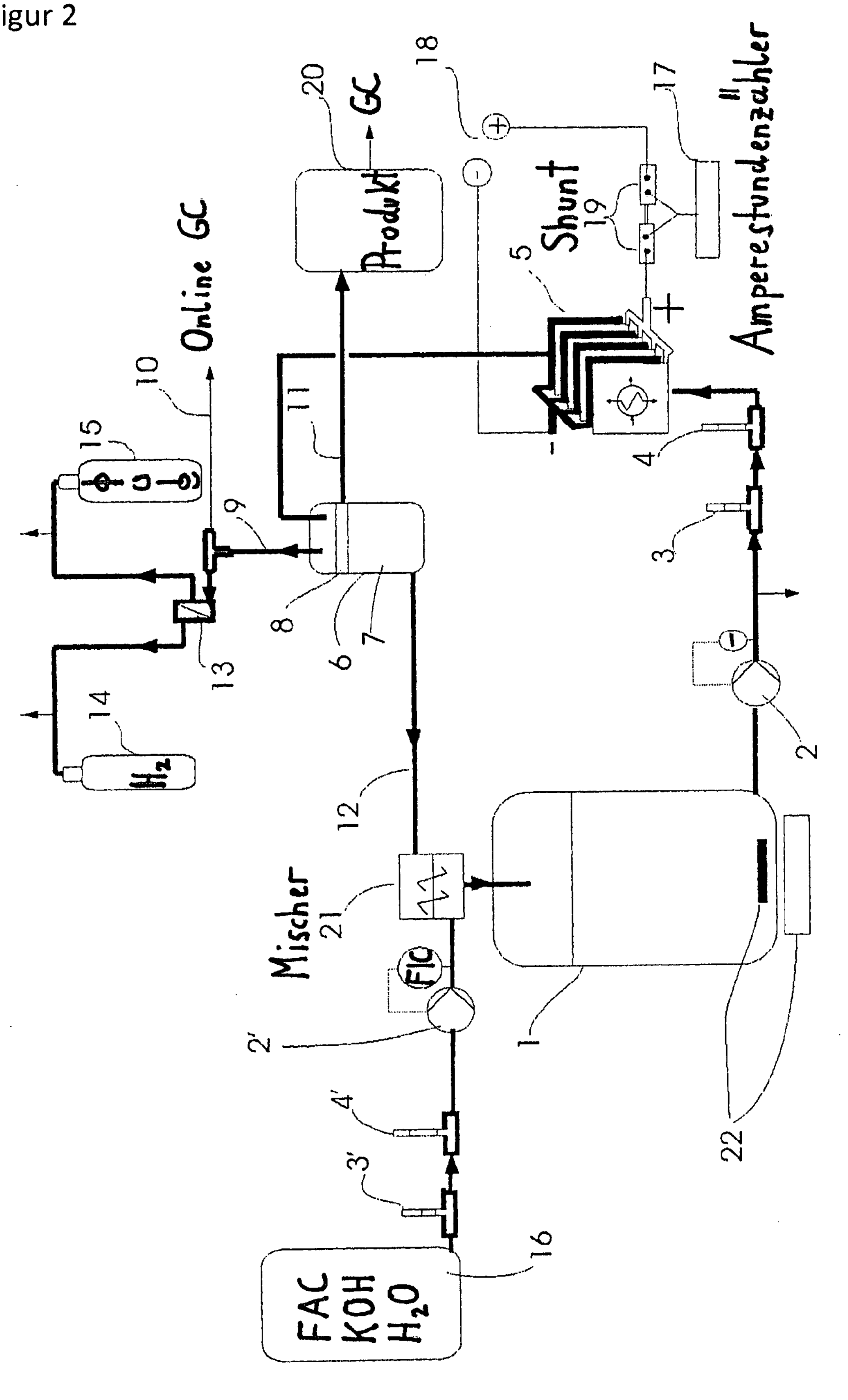
Online GC
Produkt
GC
Shunt
Amperestundenzähler
Mischer
FIC
H2
FAC
KOH
H2O
1
2
2'
3
3'
4
4'
5
6
7
8
9
10
11
12
13
14
15
16
17
18
19
20
21
22

Figur 2a

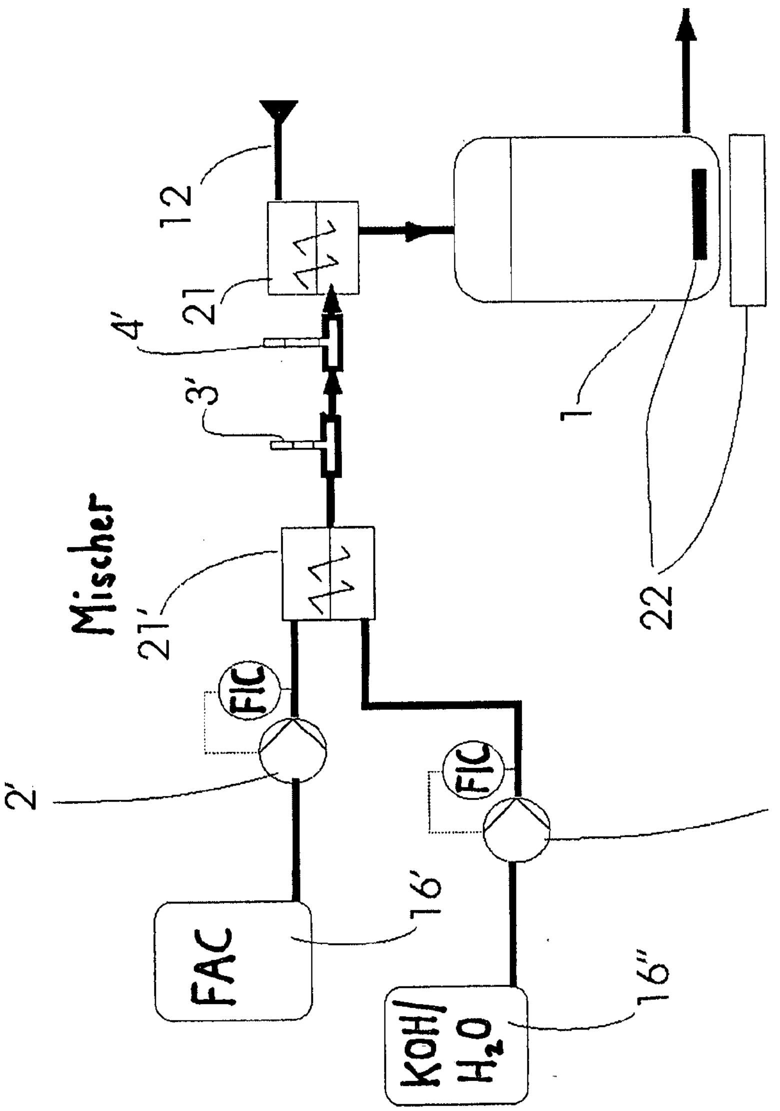

Figur 2b

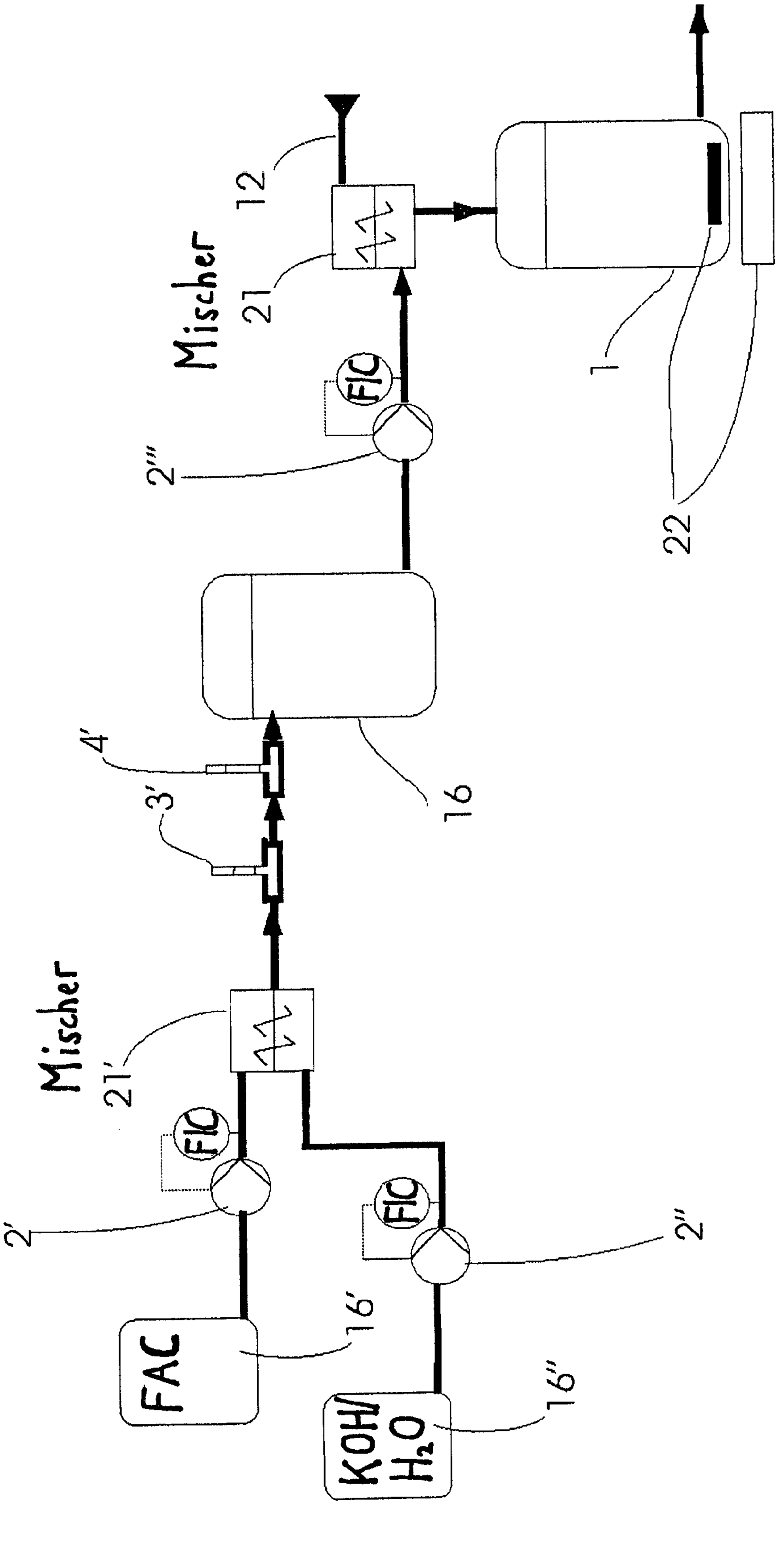
FAC
KOH/
H2O
16'
16''
2'
2''
FIC
FIC
Mischer
21'
3'
4'
16
2'''
FIC
Mischer
21
12
1
22

Figur 3

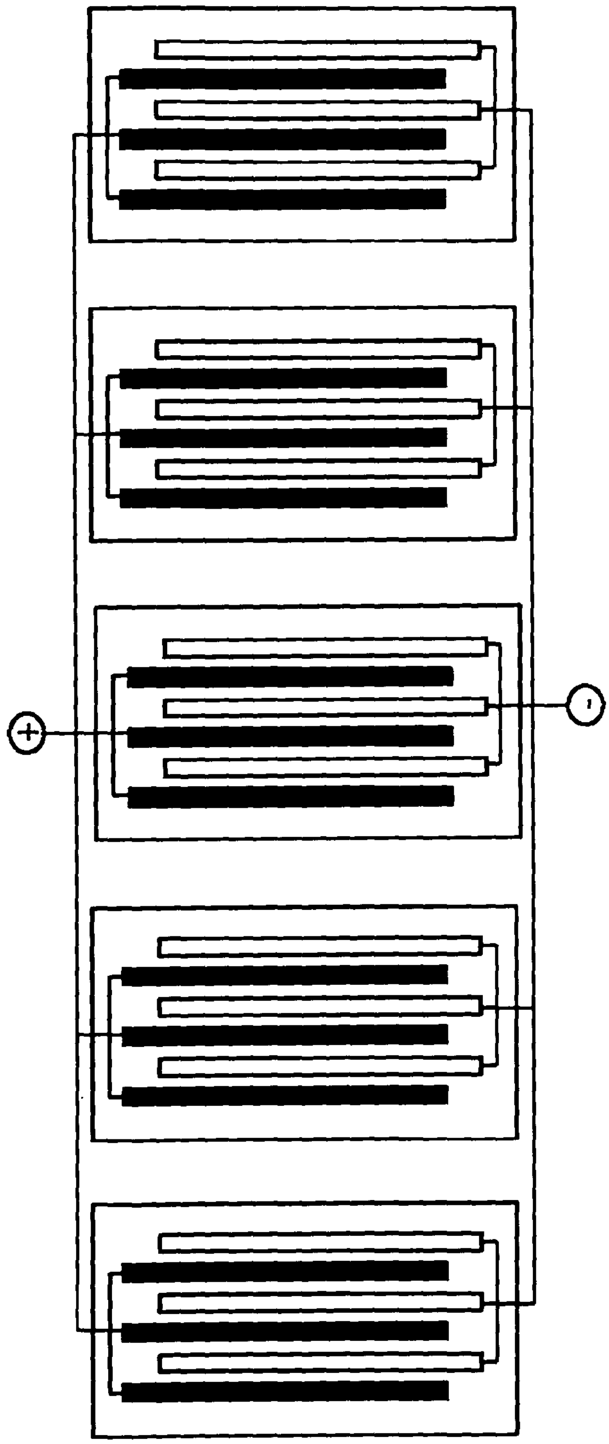

Figur 4

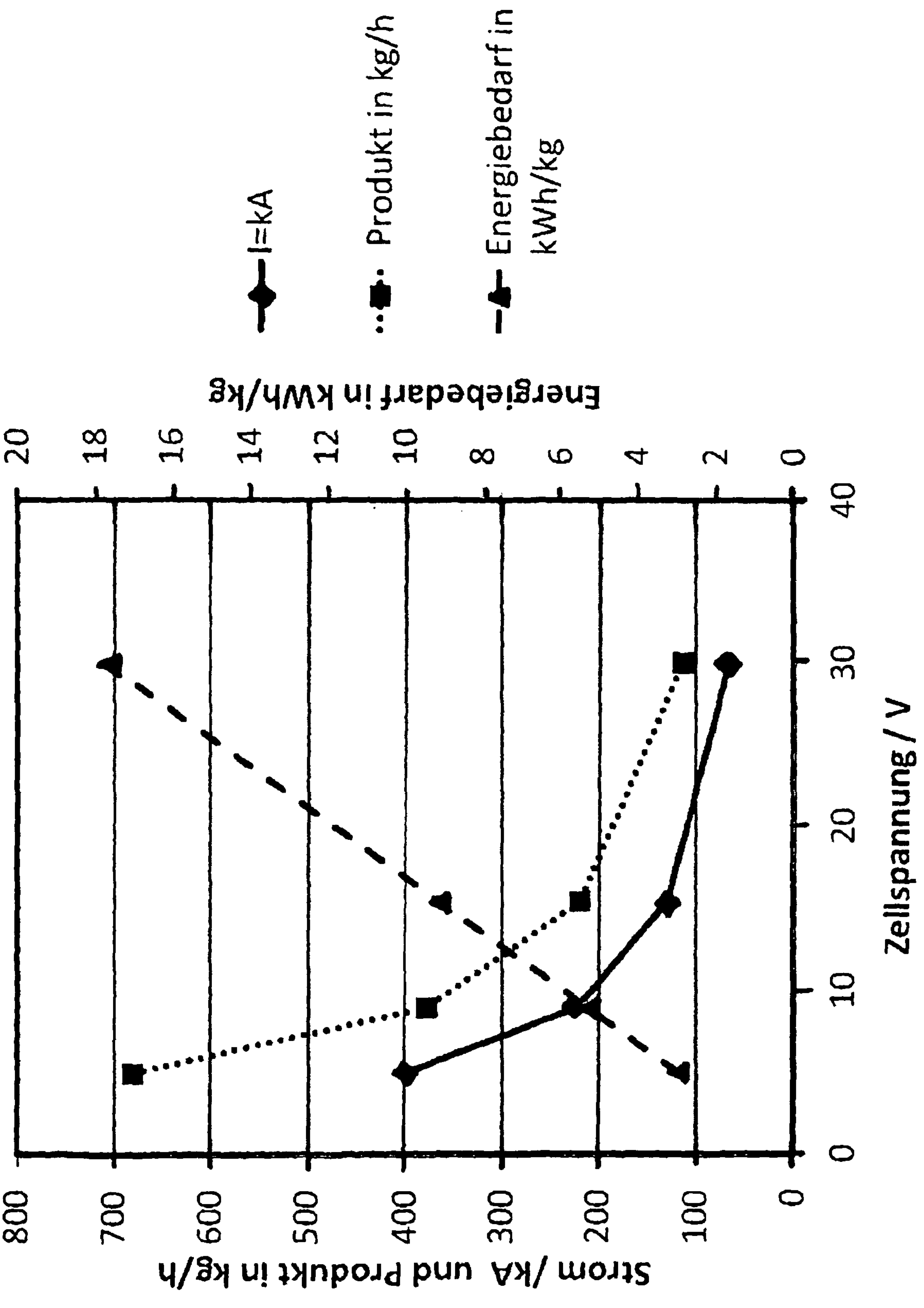

Strom /kA und Produkt in kg/h
Energiebedarf in kWh/kg
Zellspannung / V
I=kA
Produkt in kg/h
Energiebedarf in kWh/kg
0
100
200
300
400
500
600
700
800
0
2
4
6
8
10
12
14
16
18
20
0
10
20
30
40

Figur 5

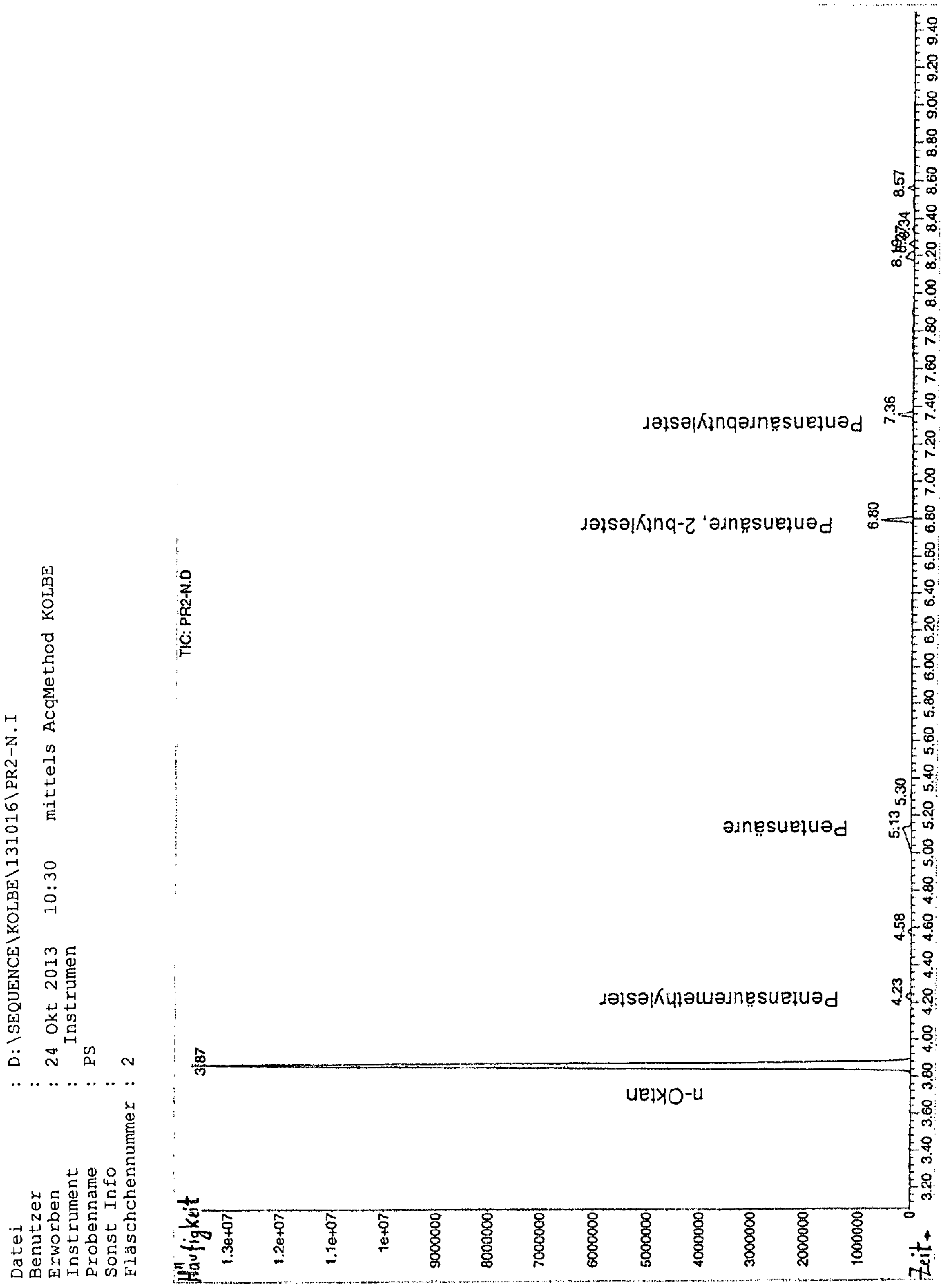
Datei : D:\SEQUENCE\KOLBE\131016\PR2-N.I
Benutzer :
Erworben : 24 Okt 2013 10:30 mittels AcqMethod KOLBE
Instrument : Instrumen
Probenname : PS
Sonst Info :
Fläschchennummer : 2
TIC: PR2-N.D
Häufigkeit
Zeit
n-Oktan
Pentansäuremethylester
Pentansäure
Pentansäure, 2-butylester
Pentansäurebutylester
3.87
4.23
4.58
5.13
5.30
6.80
7.36
8.57

Figur 6

```
Datei              : D:\SEQUENCE\KOLBE\140120\2.D
Benutzer           :
Erworben           : 21 Jan 2014  11:00    mittels AcqMethod KEROSIN
Instrument         :   Instrumen
Probenname         : Kerosin
Sonst Info         :
Fläschchennummer   : 1
```

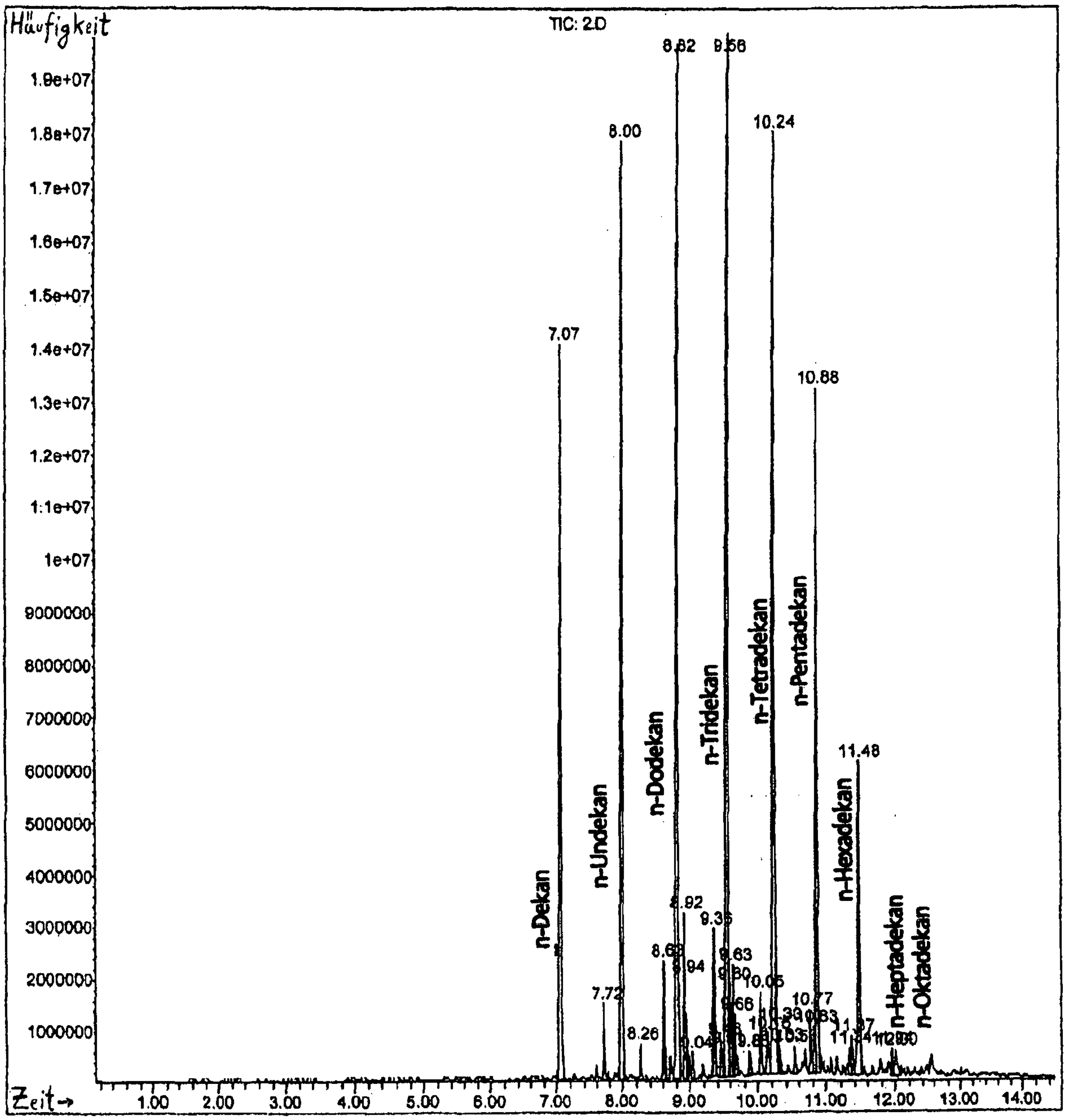

Figur 7A

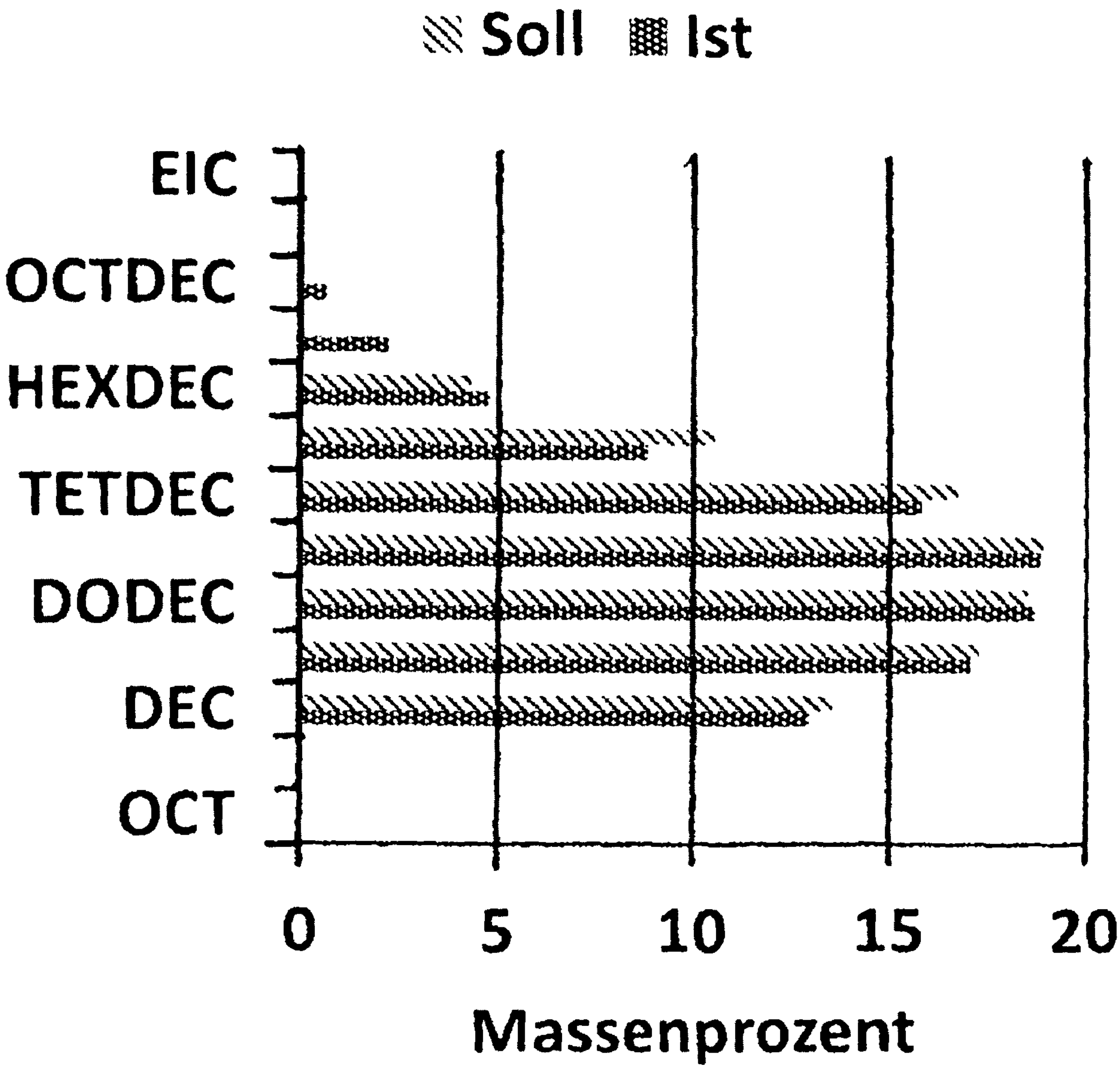
Soll
Ist
EIC
OCTDEC
HEXDEC
TETDEC
DODEC
DEC
OCT
0
5
10
15
20
Massenprozent

Figur 7B

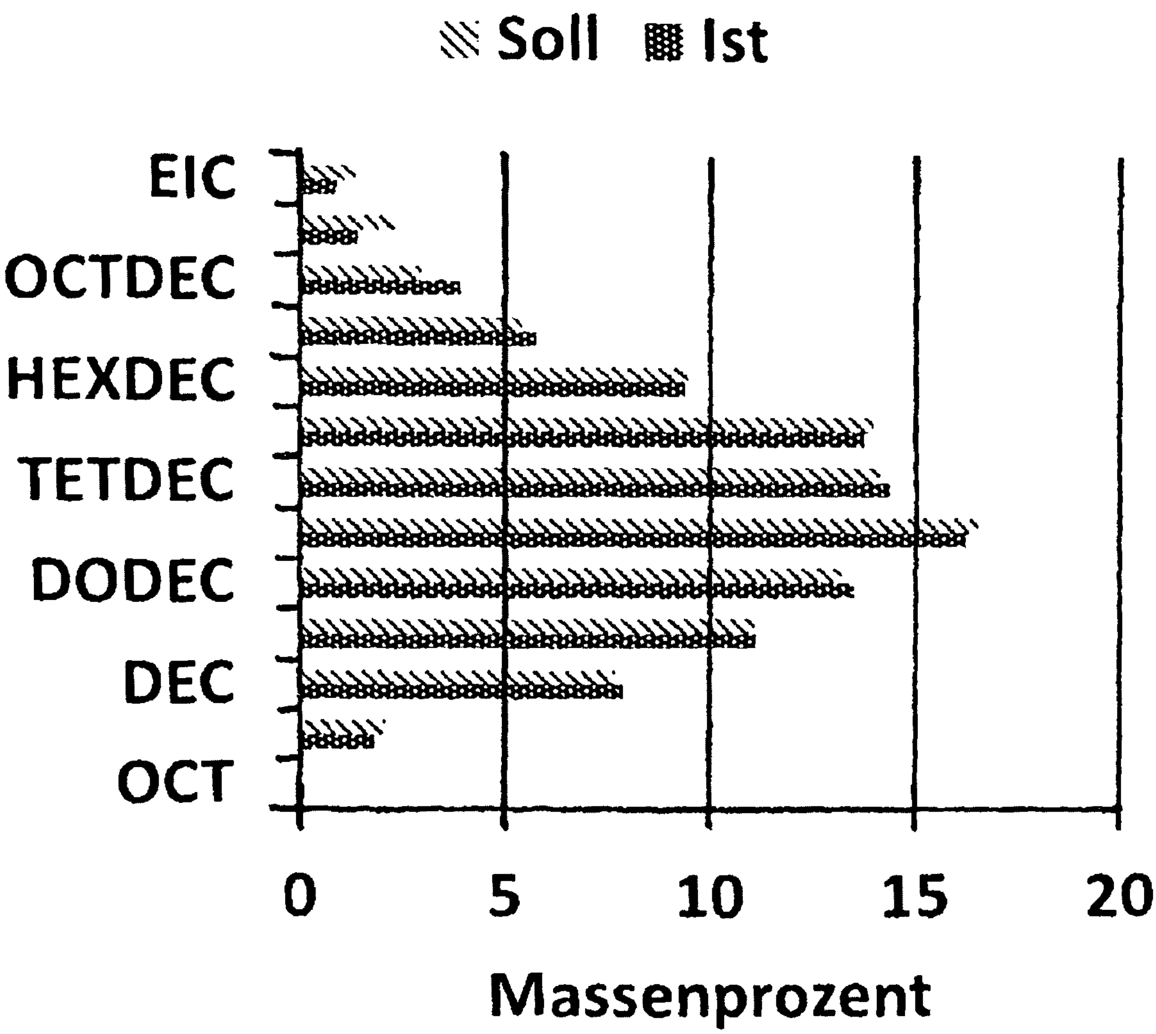
Soll
Ist
EIC
OCTDEC
HEXDEC
TETDEC
DODEC
DEC
OCT
0
5
10
15
20
Massenprozent

Figur 7C

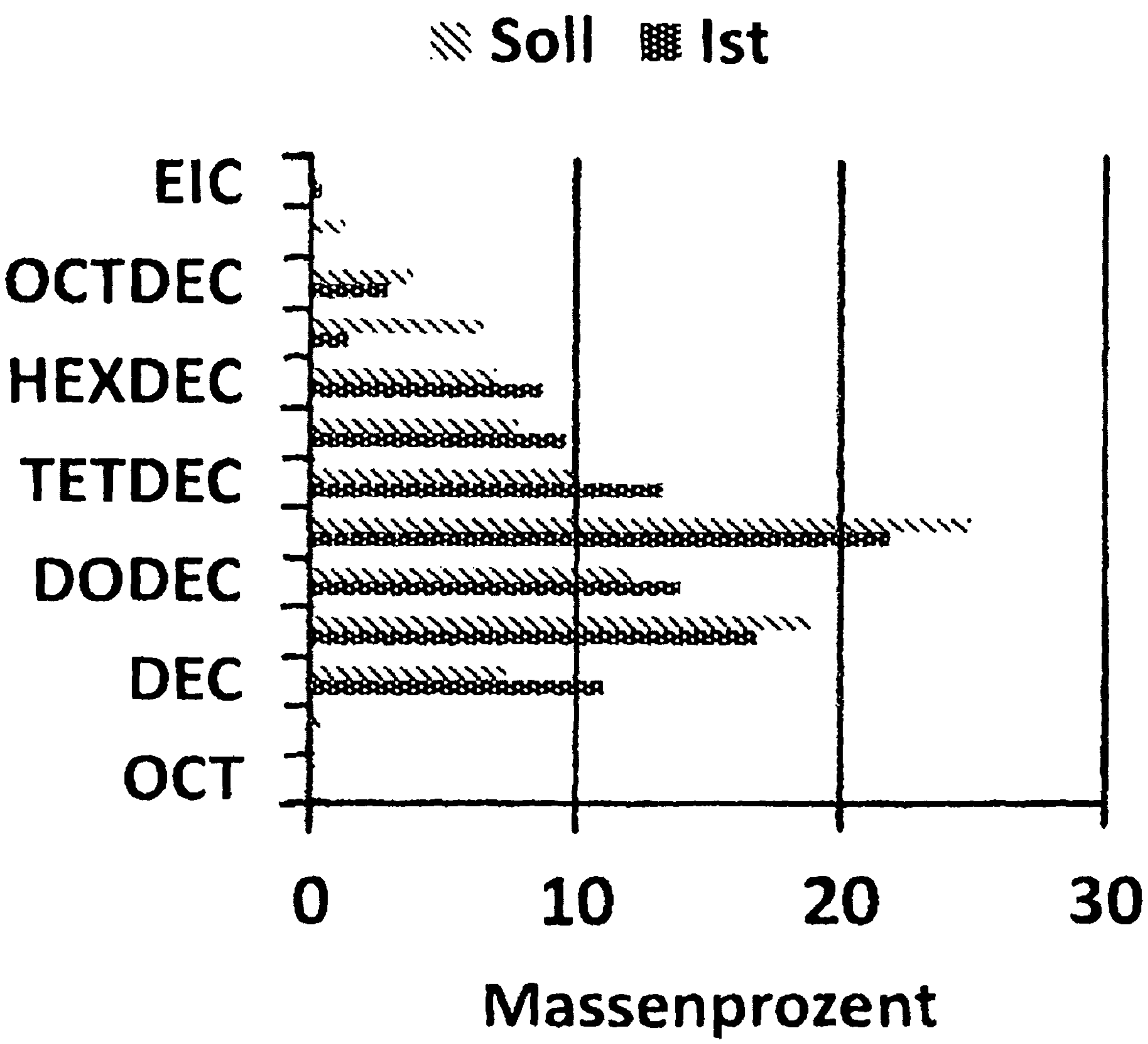
Soll
Ist
EIC
OCTDEC
HEXDEC
TETDEC
DODEC
DEC
OCT
0
10
20
30
Massenprozent

Figur 8A

$a_1$)

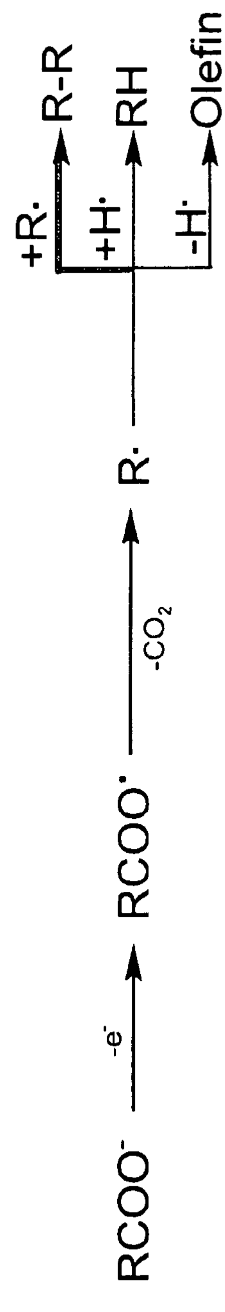


$a_2$)

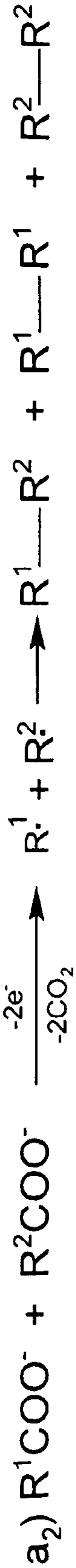

Figur 8B

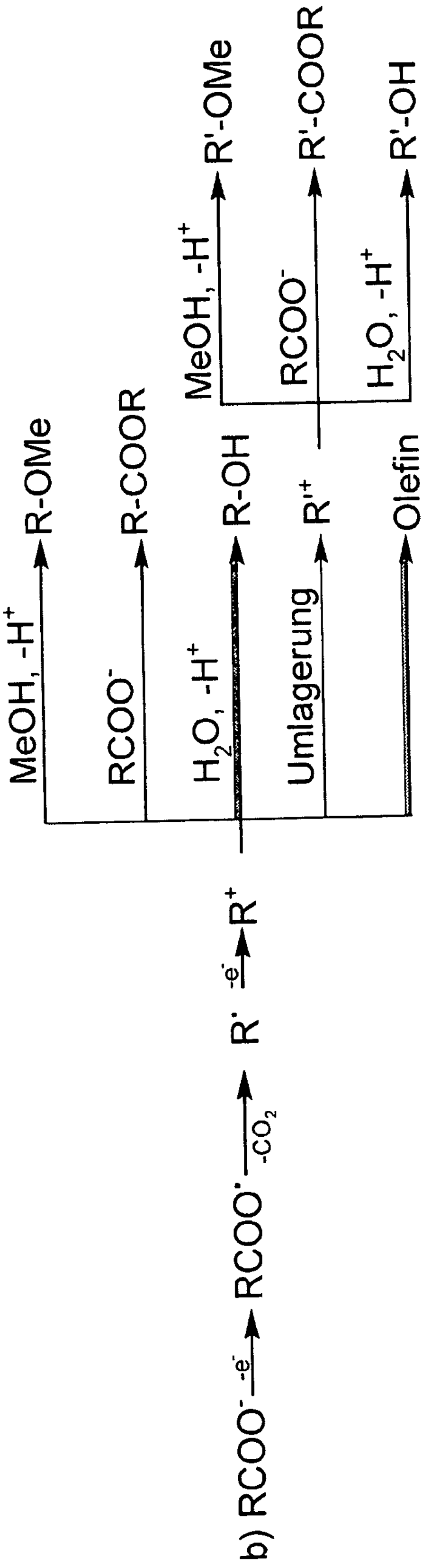

Figur 8C

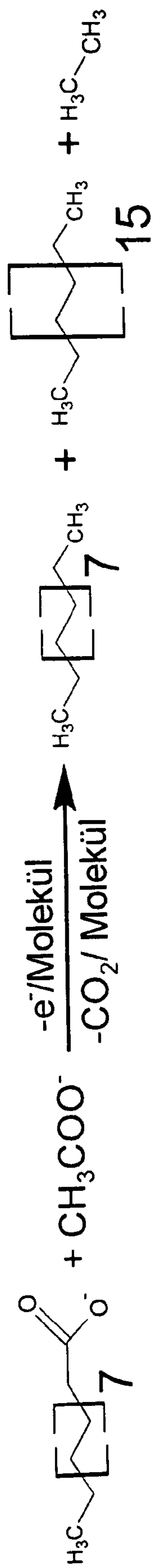

Figur 9

| | Fettsäure | Formel | Schmelzpunkt/°C | Säure | Produkt | Säuren Gemisch aus n-Fettsäuren | Produkt Gemisch aus n-Alkanen | |
|---|---|---|---|---|---|---|---|---|
| a | Pentansäure | $C_4H_9COOH$ | −35 | a+a | $C_8H_{18}$ | a+b+c+d+e+f+g+h | $C_8$ -$C_{22}$ | diesel-äquivalentes Produkt |
| b | Hexansäure | $C_5H_{11}COOH$ | −4 | b+b | $C_{10}H_{22}$ | a+b+c+d+e | $C_8$ -$C_{16}$ | kerosin-äquivalentes Produkt |
| c | Heptansäure | $C_6H_{13}COOH$ | −7,5 | c+c | $C_{12}H_{26}$ | b+c+d+e+g | $C_8$-$C_{18}$ | Lampenöl äquivalentes Produkt |
| d | Octansäure | $C_7H_{15}COOH$ | 17 | d+d | $C_{14}H_{30}$ | | | |
| e | Nonansäure | $C_8H_{17}COOH$ | 12,5 | e+e | $C_{16}H_{34}$ | | | |
| f | Decansäure | $C_9H_{19}COOH$ | 31 | f+f | $C_{18}H_{38}$ | | | |
| g | Undecansäure | $C_{10}H_{21}COOH$ | 29–30 | g+g | $C_{20}H_{42}$ | | | |
| h | Dodecansäure | $C_{11}H_{23}COOH$ | 43,2 | h+h | $C_{22}H_{46}$ | | | |

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1114203 B1
- US 3652430 A
- WO 2014200916 A1
- EP 1185359 B1
- EP 1311341 B1